(19) **Europäisches Patentamt European Patent Office Office européen des brevets**

(11) **EP 4 322 362 B1**

(12) **FASCICULE DE BREVET EUROPEEN**

(45) Date de publication et mention de la délivrance du brevet:
**10.09.2025 Bulletin 2025/37**

(21) Numéro de dépôt: **23219745.9**

(22) Date de dépôt: **17.11.2021**

(51) Classification Internationale des Brevets (IPC):
*H02J 3/16* *(2006.01)*  *H02J 3/32* *(2006.01)*
*H02J 3/38* *(2006.01)*  *H02J 3/48* *(2006.01)*
*H02J 3/50* *(2006.01)*

(52) Classification Coopérative des Brevets (CPC):
**H02J 3/381; H02J 3/16; H02J 3/32; H02J 3/48; H02J 3/50;** Y02E 40/30; Y02P 80/10

(54) **DISPOSITIF ET PROCÉDÉ DE CONTRÔLE DE LA TENSION DES MICRORÉSEAUX**

VORRICHTUNG UND VERFAHREN ZUR STEUERUNG DER SPANNUNG VON MIKROARRAYS

DEVICE AND METHOD FOR CONTROLLING THE VOLTAGE OF MICROGRIDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2020 FR 2011830**

(43) Date de publication de la demande:
**14.02.2024 Bulletin 2024/07**

(62) Numéro(s) de document de la (des) demande(s) initiale(s) en application de l'article 76 CBE:
**21824611.4 / 4 248 538**

(73) Titulaire: **Electricité de France**
**75008 Paris (FR)**

(72) Inventeur: **BENAVENT, Fabien**
**75017 Paris (FR)**

(74) Mandataire: **Regimbeau**
**20, rue de Chazelles**
**75847 Paris Cedex 17 (FR)**

(56) Documents cités:
**CN-A- 108 777 493**   **CN-A- 109 038 644**
**KR-A- 20140 098 431**   **US-A1- 2016 204 611**

## Description

L'invention concerne un dispositif de contrôle d'une ou plusieurs unité(s) de génération d'électricité et/ou unité(s) de stockage d'électricité, destinée(s) à être connectée(s) à au moins une ligne d'un microréseau de consommation et/ou de production d'électricité.

Le domaine de l'invention concerne les microréseaux (en anglais « microgrid » de consommation et/ou de production d'électricité) comportant d'une part une ou plusieurs premières sources de production d'électricité centralisées (désignées par $G_1$, $G_2$, ...$G_M$ dans ce qui suit et pouvant être par exemple des sources thermiques (diesel ou au charbon par exemple, ou autres) et des deuxièmes sources de production d'électricité distribuées sur des lignes reliées aux premières sources, les deuxièmes sources de production d'électricité pouvant fonctionner par intermittence et pouvant comprendre par exemple des sources de production d'électricité photovoltaïques ou à éoliennes. Les premières sources de production d'électricité centralisées peuvent fonctionner la totalité du temps.

Les microréseaux peuvent fonctionner avec une faible consommation (par exemple ordre de grandeur de consommation inférieure à quelques dizaines de MW) et de manière autonome une partie ou la totalité du temps. Ses sources d'énergie distribuées sont en général des producteurs renouvelables avec ou sans batterie de stockage d'énergie. Ces microréseaux peuvent par exemple être présents sur des îles, ou dans des endroits difficiles d'accès, comme par exemple les zones montagneuses, les déserts.

Dans un premier type de systèmes électriques, à savoir les systèmes électriques conventionnels disposant d'un réseau de transport, le fonctionnement et les services-système de ces systèmes électriques sont basés sur la corrélation U-Q (tension - puissance réactive) d'une part et f-P (fréquence - puissance active) d'autre part. Ces corrélations sont la conséquence des caractéristiques électriques des lignes aériennes HTB (haute tension B pour des installations électriques dans lesquelles la tension excède 50000 volts en courant alternatif) qui présentent une impédance équivalente de nature fortement inductive.

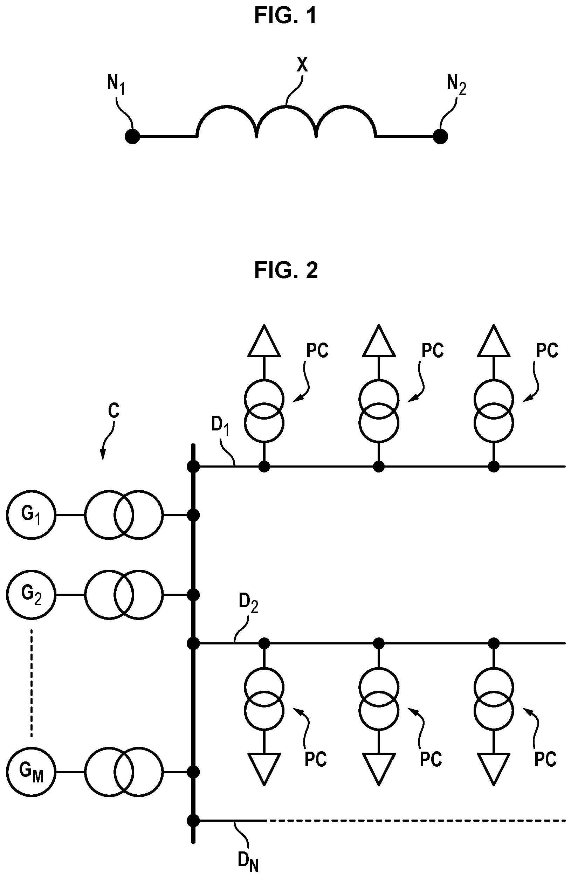

En assimilant l'impédance équivalente d'une ligne HTB à sa réactance équivalente X entre deux nœuds N1 et N2 selon la figure 1 et en linéarisant les équations de la puissance active et de la puissance réactive du nœud N1, on obtient les expressions couramment utilisées ci-dessous :

$$P_1 \approx \frac{U_1 U_2}{X} [\theta_1 - \theta_2]$$

$$Q_1 \approx \frac{U_1}{X} [U_1 - U_2]$$

Avec :

$P_1$, $Q_1$, $U_1$ et $\theta_1$ respectivement la puissance active, la puissance réactive, la valeur efficace des tensions entre phases et l'angle de la tension du nœud N1,

$U_2$ et $\theta_2$ respectivement la valeur efficace des tensions entre phases et l'angle de la tension du nœud N2,

X la réactance équivalente de la ligne aérienne HTB

Ces équations illustrent les corrélations U-Q et f-P mentionnées plus haut, la puissance active $P_1$ est proportionnelle à la différence $\theta_1 - \theta_2$ des angles des tensions qui correspondent eux-mêmes aux intégrales des fréquences des deux nœuds N1 et N2, multipliées par un facteur de $2\pi$ et la puissance réactive $Q_1$ est proportionnelle à la différence $U_1 - U_2$ des tensions des deux nœuds N1 et N2.

Par conséquent, la tension du réseau de transport peut être réglée par les groupes de production, les dispositifs de fourniture et/ou de compensation de puissance réactive, à leurs différents points de raccordement tout en ayant un impact négligeable sur les transits de puissance active dans le système.

Dans un deuxième type de systèmes électriques, à savoir les microréseaux sans sources d'énergie distribuées, la structure classique des microréseaux consiste à la figure 2 en une unique centrale thermique C composée de plusieurs groupes $G_1$, $G_2$, ...$G_M$ de production et connectée à plusieurs départs $D_1$, $D_2$, ..., $D_N$ de lignes où sont distribués des postes consommateurs $PC_I$, $PC_{I+1}$, $PC_{I,2}$.

Contrairement aux systèmes conventionnels, le niveau de tension correspond généralement à de la HTA (haute tension A pour des installations électriques dans lesquelles la tension excède 1000 volts sans dépasser 50000 volts en courant alternatif) ou de la BT (basse tension pour des installations électriques dans lesquelles les tensions sont comprises entre 50 et 1000 volts en régime de tension alternative) et l'impédance des lignes est majoritairement résistive dans le cas des lignes aériennes ou résistive - capacitive dans le cas des lignes sous-terraines. Les corrélations présentées ci-dessus pour le premier type de systèmes électriques sont par conséquent inopérantes et doivent être recalculées.

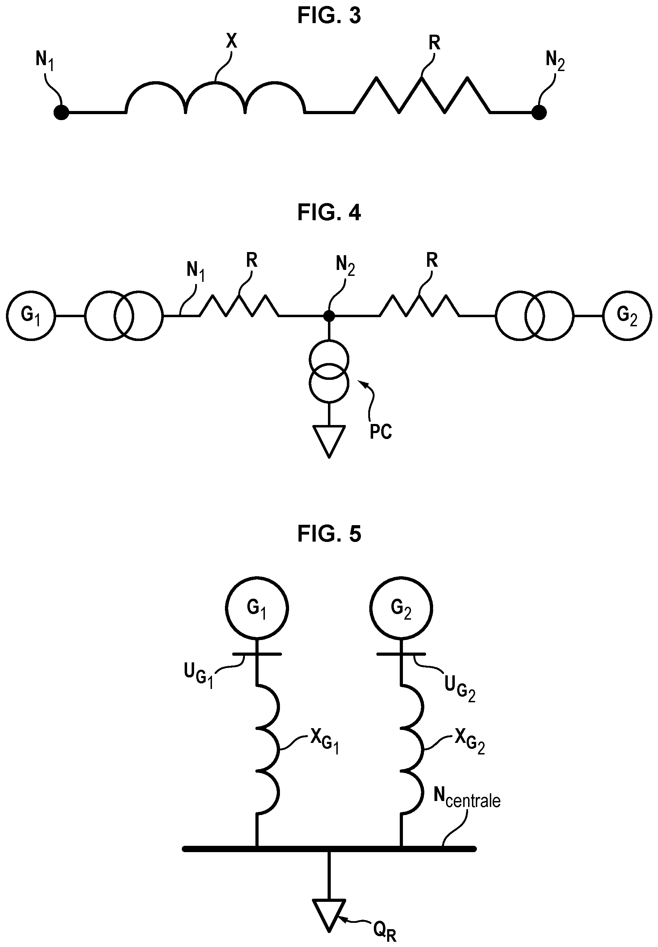

Les lignes aériennes HTA et BT peuvent être modélisées selon la figure 3 avec entre les deux nœuds électrique N1 et N2 reliés par la ligne une résistance R en série avec une inductance équivalente X potentiellement non-négligeable.

En linéarisant les équations de la puissance active et de la puissance réactive au nœud N1 on obtient les expressions ci-dessous :

$$P_1 \approx \frac{XU_1U_2}{R^2+X^2}[\theta_1-\theta_2] + \frac{RU_1}{R^2+X^2}[U_1-U_2]$$

$$Q_1 \approx \frac{XU_1}{R^2+X^2}[U_1-U_2] - \frac{RU_1U_2}{R^2+X^2}[\theta_1-\theta_2]$$

Avec :

$P_1$, $Q_1$, $U_1$ et $\theta_1$ respectivement la puissance active, la puissance réactive, la valeur efficace des tensions entre phases et l'angle de la tension du nœud N1

$U_2$ et $\theta_2$ respectivement la valeur efficace des tensions entre phases et l'angle de la tension du nœud N2

R et X la résistance équivalente et la réactance équivalente de la ligne aérienne HTA ou BT.

Les puissances actives et réactives $P_1$, $Q_1$ dépendent dans ces conditions toutes deux à la fois de la différence $U_1$ - $U_2$ des valeurs efficaces des tensions et de la différence $\theta_1$ - $\theta_2$ de leurs angles.

En négligeant la réactance équivalente X de la ligne devant sa résistance équivalente R, on obtient les expressions simplifiées ci-dessous :

$$P_1 \approx \frac{U_1}{R}[U_1-U_2]$$

$$Q_1 \approx -\frac{U_1U_2}{R}[\theta_1-\theta_2]$$

On observe alors une inversion des corrélations existantes dans les systèmes électriques du premier type disposant d'un réseau de transport pour obtenir les nouvelles corrélations U-P et f-Q pour les installations du deuxième type.

Par conséquent, si les groupes thermiques $G_1$, $G_2$, ...$G_M$ de production d'un microréseau étaient distribués au lieu d'être centralisés comme l'illustre la figure 4, leur pilotage devrait être complètement adapté pour tenir compte des corrélations U-P et f-Q : la tension des groupes $G_1$, $G_2$, ...$G_M$ de production serait modulée pour réguler leur puissance active et leur fréquence serait modulée pour réguler leur puissance réactive.

On décrit ci-dessous un réglage primaire de tension et un partage de la charge en puissance réactive, suivant l'état de la technique. Pour les groupes de production centralisés $G_1$, $G_2$, ...$G_M$ dans la grande majorité des microréseaux, les corrélations définies ci-dessus pour le premier type s'appliquent entre les groupes $G_1$, $G_2$, ...$G_M$ car l'impédance équivalente des ensembles alternateurs-transformateurs de ces groupes $G_1$, $G_2$, ...$G_M$ est majoritairement inductive.

L'exemple ci-dessous de la figure 5 représente deux groupes de production centralisés $G_1$ et $G_2$, modélisés de façon équivalente en aval de leur transformateur élévateur (côté réseau), alimentant une charge consommant la puissance réactive $Q_R$ et modélisée par une source de courant idéale, connectée au même nœud électrique $N_{centrale}$ que les groupes de production centralisés $G_1$ et $G_2$.

Les puissances réactives fournies par les groupes $G_1$ et $G_2$ au niveau de leur stator peuvent être exprimés par les équations suivantes :

$$Q_{G_1} \approx \frac{X_{G_2}}{X_{G_1}+X_{G_2}}\sqrt{3}U_{G_1}I_R\sin(\theta_{G_1}-\gamma_R) + \frac{U_{G_1}[U_{G_1}-U_{G_2}]}{X_{G_1}+X_{G_2}}$$

$$Q_{G_2} \approx \frac{X_{G_1}}{X_{G_1} + X_{G_2}} \sqrt{3} U_{G_2} I_R \sin\left(\theta_{G_2} - \gamma_R\right) + \frac{U_{G_2}\left[U_{G_2} - U_{G_1}\right]}{X_{G_1} + X_{G_2}}$$

Avec :

$Q_{G_1}$ et $Q_{G_2}$ les puissances réactives injectées par les deux groupes $G_1$ et $G_2$ au niveau de leur stator,
$X_{G_1}$ et $X_{G_2}$ les réactances équivalentes des ensembles alternateur - transformateur des deux groupes $G_1$ et $G_2$ ramenées côté réseau,
$\theta_{G_1}$ et $\theta_{G_2}$ les angles des tensions des deux groupes $G_1$ et $G_2$ ramenées côté réseau,
$I_R$ et $\gamma_R$ la valeur efficace et l'angle du courant de la charge $Q_R$,
$U_{G_1}$ et $U_{G_2}$ les tensions des deux groupes $G_1$ et $G_2$ au niveau de leur stator ramenées côté réseau,

Dans ces équations, les premiers termes $\frac{X_{G_2}}{X_{G_1}+X_{G_2}} \sqrt{3} U_{G_1} I_R \sin\left(\theta_{G_1} - \gamma_R\right)$ et

$\frac{X_{G_1}}{X_{G_1}+X_{G_2}} \sqrt{3} U_{G_2} I_R \sin\left(\theta_{G_2} - \gamma_R\right)$ correspondent à ce que l'on peut considérer comme étant la « contribution

naturelle » des groupes $G_1$ et $G_2$ de production à la fourniture de puissance réactive. Celle-ci dépend principalement du terme $\frac{X_{G_2}}{X_{G_1}+X_{G_2}}$ pour le groupe $G_1$ et du terme $\frac{X_{G_1}}{X_{G_1}+X_{G_2}}$ pour le groupe $G_2$. Ces termes traduisent le fait que le

groupe $G_1$ ou $G_2$ ayant la réactance équivalente la plus faible fournira davantage de puissance réactive à la charge que le groupe $G_2$ ou $G_1$ ayant la réactance équivalente la plus grande.

Les deuxièmes termes $\frac{U_{G_1}\left[U_{G_1}-U_{G_2}\right]}{X_{G_1}+X_{G_2}}$ et $\frac{U_{G_2}\left[U_{G_2}-U_{G_1}\right]}{X_{G_1}+X_{G_2}}$ correspondent à ce que l'on peut considérer comme étant la « contribution contrôlée » des groupes de production $G_1$ et $G_2$ à la fourniture de puissance réactive. Ils traduisent le fait que le groupe $G_1$ ou $G_2$ ayant la tension statorique la plus élevée fournira davantage de puissance réactive à la charge que sa contribution naturelle tandis que le groupe $G_2$ ou $G_1$ ayant la tension statorique la plus faible fournira moins de puissance réactive à la charge que sa contribution naturelle.

On peut par conséquent noter que si les tensions statoriques des groupes $G_1$ et $G_2$ sont identiques, la contribution contrôlée à la fourniture de puissance réactive n'existe pas et seul le rapport des réactances équivalentes des groupes $G_1$ et $G_2$ détermine leur fourniture de puissance réactive. Il n'y a dans ce cas pas de considération pour les capacités en puissance réactive des groupes $G_1$ et $G_2$ qui peuvent être dissymétriques ce qui se traduit par une désoptimisation du système.

A l'inverse la modulation des tensions des groupes $G_1$ et $G_2$ permet de piloter l'injection de puissance réactive des groupes $G_1$ et $G_2$.

Dans un troisième type d'installations électriques, la transition énergétique des microréseaux se traduit dans certains cas par l'installation de capacités importantes d'énergie renouvelable, notamment de centrales photovoltaïques, pouvant dépasser plusieurs fois la consommation maximale des microréseaux en puissance active. Il est alors indispensable d'installer une solution de stockage, souvent composée de batteries électrochimiques.

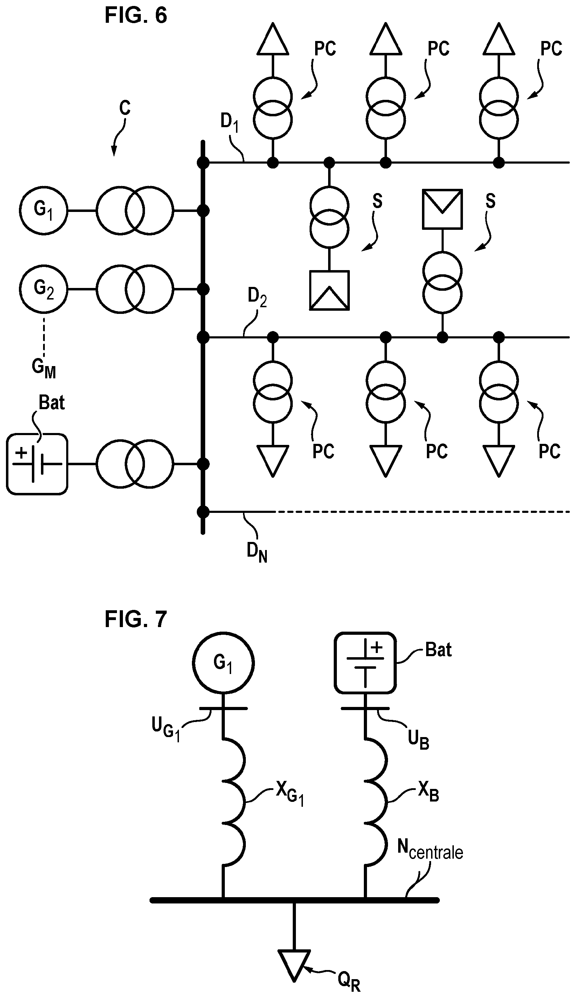

Ces mêmes microréseaux sont en général amenés à devoir fonctionner pendant une partie de la journée sans ou avec peu de groupes thermiques $G_1$, $G_2$, ...$G_M$ de production centralisés et il est par conséquent nécessaire que les batteries de stockage disposent d'un mode de fonctionnement permettant de suppléer et remplacer les services système réalisés par les groupes thermiques $G_1$, $G_2$, ...$G_M$ tels que le réglage de tension, le réglage de fréquence, l'injection de courant de défaut et la capacité à réalimenter le microgrid après un incident généralisé (capacité de « black start » en anglais, qui signifie démarrage à froid). Il est dès lors préférable pour le bon fonctionnement de ces services système que ces batteries Bat de stockage soient centralisées avec les groupes thermiques $G_1$, $G_2$, ...$G_M$ dans une centrale C de production d'électricité et de stockage d'électricité. La structure de microréseau résultant est représentée à la figure 6.

Avec cette nouvelle structure de la figure 6, l'ensemble C des batteries Bat et des groupes thermiques $G_1$, $G_2$, ...$G_M$ peut être séparé par rapport aux sources S de production d'électricité renouvelables distribués avec les postes consommateurs $PC_I$, $PC_{I+1}$, $PC_{I+2}$ sur les départs $D_1$, $D_2$, ..., $D_N$ de lignes par des longueurs significatives de ces lignes aériennes ou souterraines HTA ou BT et il est dès lors nécessaire de considérer deux niveaux de corrélation physique : les corrélations applicables au niveau intra-centrale C groupes de production - stockage, les corrélations entre la centrale C et les sources S de production d'électricité décentralisées.

Au niveau de la centrale C de production d'électricité et de stockage d'électricité, l'intégration de batteries Bat de stockage ne modifie pas le fonctionnement décrit ci-dessus pour le deuxième type d'installations et il est possible de modéliser ses différentes sources de manière analogue, ainsi que représenté à la figure 7.

Les équations de fourniture de puissance réactive sont identiques à celles mentionnées ci-dessus pour ce deuxième type si l'on remplace les indices des grandeurs relatives au groupe $G_2$ par les indices B de la batterie Bat (tension $U_B$ de la batterie Bat, réactance équivalente $X_B$ de la batterie Bat représentées à la figure 7).

On décrit ci-dessous les corrélations entre la centrale C et les sources S de production d'électricité décentralisées et la problématique de la tenue de tension du microréseau.

La centrale C et les sources S de production d'électricité décentralisées étant connectés par des lignes aériennes HTA ou BT, les corrélations applicables sont celles du second type d'installations, c'est-à-dire U-P et f-Q.

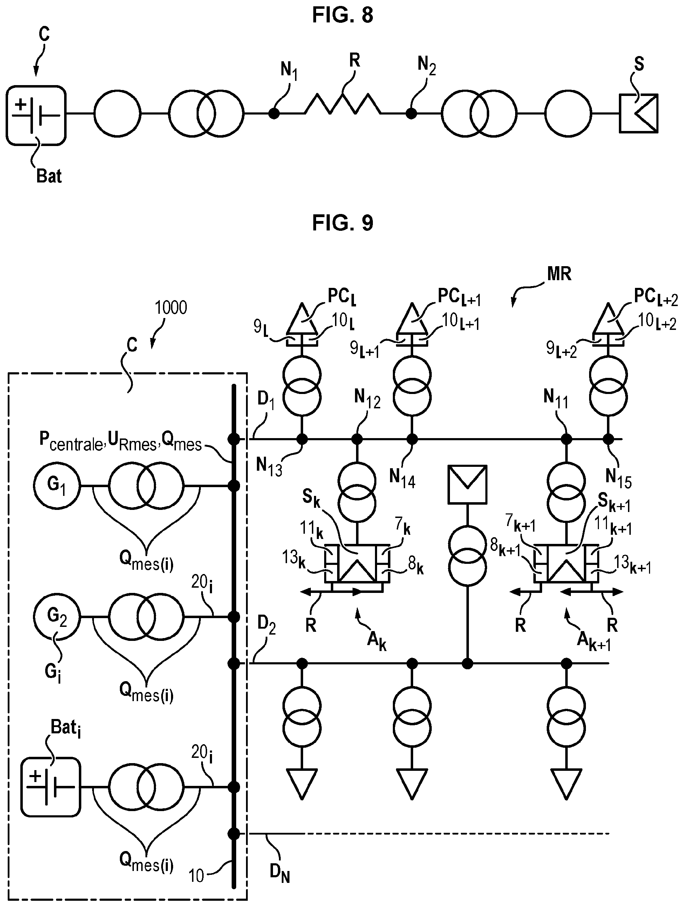

Son impact sur la tenue de tension du microréseau peut être illustré à travers l'exemple d'une source S de production d'électricité décentralisée photovoltaïque chargeant une batterie Bat de la centrale C au travers d'une ligne aérienne assimilée à sa résistance équivalente R entre le nœud N1 situé du côté de la centrale C et le nœud N2 nœud N2 situé du côté de la source S de production d'électricité décentralisée photovoltaïque à la figure 8.

Dans l'exemple de la figure 8, la source S de production d'électricité décentralisée photovoltaïque peut injecter la puissance active maximale disponible grâce à un algorithme de suivi de point de puissance (« maximum power point tracking » en anglais) et la batterie Bat peut maintenir la tension du nœud N1 situé du côté de la centrale C à une valeur proche de la tension nominale si elle dispose d'un algorithme de partage de la puissance réactive ou exactement à la tension nominale si un algorithme de réglage secondaire de tension est également utilisé.

Dans cette situation, la valeur efficace $U_2$ de la tension au nœud N2 situé du côté de la source S de production d'électricité décentralisée photovoltaïque peut être calculée via l'équation, suivante, où $U_1$ est la valeur efficace de la tension au nœud N1 :

$$U_2 \approx U_1 - \frac{RP_1}{U_1} \; ; avec \; P_1 < 0$$

Pour une tension $U_1$ fixée par la batterie et une résistance équivalente R de ligne donnée, l'élévation de la tension $U_2$ est donc proportionnelle au transit de puissance active $P_1$ venant charger la batterie Bat. Ainsi, un premier inconvénient est que si ce transit est suffisamment important, la tension $U_2$ sortira de la plage contractuelle.

D'une manière plus globale, en reprenant la structure complète d'un microréseau de la figure 6, ce premier inconvénient se traduit par le fait qu'une partie du microréseau pourrait se retrouver en surtension en raison de forts transits de puissance active des sources S de production d'électricité décentralisées vers la batterie Bat.

Bien que le fonctionnement des microréseaux en présence de sources S d'énergie distribuées ait fait l'objets de publications scientifiques, celles-ci se concentrent principalement sur le partage de la charge entre des groupes thermiques G et/ou de batteries de stockage décentralisées en proposant des algorithmes de partage de la charge prenant en considération les corrélations dues aux lignes aériennes HTA ou BT (cf. deuxième type mentionné ci-dessus), par exemple avec un partage de la charge en puissance active et réactive par statisme de type :

$$U_{ref} = U_N - K_{UP}P - K_{UQ}Q$$

$$f_{ref} = f_N - K_{fP}P - K_{fQ}Q$$

Avec :

$U_{ref}$ et $f_{ref}$ les références de tension et de fréquence de chaque groupe thermique et batterie $P$ et $Q$ la puissance active et la puissance réactive injectée par chaque groupe thermique et batterie
$K_{UP}$, $K_{UQ}$, $K_{fP}$, $K_{fQ}$ les coefficients de réglage de l'algorithme.

Des algorithmes plus complexes utilisant le concept d'impédance virtuelle ont également été proposés afin d'améliorer la qualité du partage de la charge, néanmoins leur objectif reste le même.

Certaines publications décrivent des algorithmes de réglage secondaire sans pour autant adresser le premier inconvénient mentionné ci-dessus. En effet, l'utilisation de tels réglages secondaires de tension vise à ramener la tension du nœud électrique contrôlé à une valeur fixe, typiquement la valeur nominale, sans prendre en considération la tenue de tension du reste du réseau qui risque de sortir de sa plage contractuelle lors des périodes de fortes injections de puissance active des sources S de production d'électricité décentralisées vers la batterie centralisée Bat, ce qui est un deuxième inconvénient supplémentaire.

Le document CN109038644A propose un système de micro-réseau énergétique et un procédé de contrôle de régulation de tension associé. Le système et le procédé adoptent une régulation de tension à deux niveaux, qui peut s'adapter aux caractéristiques de changement de charge et de fluctuation de l'énergie renouvelable, exploiter pleinement la capacité réactive de l'énergie renouvelable, assurer la haute qualité de l'énergie de sortie du micro-réseau énergétique et soutenir la sécurité et la stabilité du réseau de distribution.

Ainsi, le problème est que les solutions existantes de réglage de tension composées d'algorithmes de partage de la puissance réactive couplés ou non avec un algorithme de réglage secondaire de la tension fonctionnant suivant l'état de la technique sont insuffisantes pour assurer la tenue de tension de l'ensemble du réseau en présence de producteurs décentralisés et ne permettent pas de pallier les premier et deuxième inconvénients mentionnés ci-dessus.

Un objectif de l'invention est d'obtenir un dispositif de contrôle de la tension des microréseaux grâce au contrôle d'au moins une unité de production d'électricité et/ou au moins une unité de stockage d'électricité, qui pallie les inconvénients mentionnés ci-dessus.

A cet effet, un premier objet de l'invention est un dispositif de contrôle d'une centrale suivant la revendication 1.

Grâce à l'invention, on remédie aux premier et deuxième inconvénients mentionnés ci-dessus.

Les revendications 2 à 8 concernent des modes de réalisation du dispositif de contrôle.

Un deuxième objet de l'invention est un procédé de contrôle d'une centrale suivant la revendication 9.

Un troisième objet de l'invention est un programme d'ordinateur suivant la revendication 10.

L'invention sera mieux comprise à la lecture de la description qui va suivre, donnée uniquement à titre d'exemple non limitatif en référence aux figures ci-dessous des dessins annexés.

La figure 1 est un schéma électrique équivalent d'une ligne de réseau électrique HTB pour un premier type de systèmes électriques, suivant l'état de la technique.

La figure 2 montre un schéma électrique d'un deuxième type de systèmes électriques, suivant l'état de la technique.

La figure 3 est un schéma électrique équivalent d'une ligne de réseau électrique de la figure 2, suivant l'état de la technique.

La figure 4 est un schéma électrique équivalent de groupes de production distribués d'un microréseau suivant l'état de la technique.

La figure 5 est un schéma électrique équivalent de deux groupes de production centralisés d'un microréseau suivant l'état de la technique.

La figure 6 représente un schéma électrique d'un troisième type d'installations électriques suivant l'état de la technique.

La figure 7 est un schéma électrique équivalent d'un groupe de production et d'un système de stockage centralisés, suivant l'état de la technique.

La figure 8 est un schéma électrique équivalent d'un groupe de production et d'un système de stockage distribué d'un microréseau, suivant l'état de la technique.

La figure 9 est un schéma électrique d'un microréseau nécessitant un dispositif de contrôle suivant des modes de réalisation de l'invention.

La figure 10 est un schéma du dispositif de contrôle suivant des modes de réalisation de l'invention.

La figure 11 est un schéma du dispositif de contrôle suivant des modes de réalisation de l'invention.

La figure 12 est un schéma du dispositif de contrôle suivant des modes de réalisation de l'invention.

La figure 13 est un schéma du dispositif de contrôle suivant des modes de réalisation de l'invention.

La figure 14 est un schéma du dispositif de contrôle suivant des modes de réalisation de l'invention.

La figure 15 est un schéma du dispositif de contrôle suivant des modes de réalisation de l'invention.

La figure 16 est un schéma du dispositif de contrôle suivant des modes de réalisation de l'invention.

La figure 17 est un organigramme d'un procédé de contrôle suivant des modes de réalisation de l'invention.

La figure 18 illustre un exemple de microréseau testé avec un exemple de dispositif de contrôle suivant l'état de la technique et avec un exemple de dispositif de contrôle suivant l'invention.

La figure 19 montre des profils de puissance active du microréseau de la figure 18.

La figure 20 montre des courbes de tension du microréseau testé avec un exemple de dispositif de contrôle suivant l'état de la technique.

La figure 21 montre des courbes de tension du microréseau testé avec un exemple de dispositif de contrôle suivant l'invention.

La figure 22 est un schéma du dispositif de contrôle suivant des modes de réalisation de l'invention.

La figure 23 montre un exemple d'architecture de modes de réalisation suivant l'invention.

La figure 24 est un schéma du dispositif de contrôle suivant des modes de réalisation de l'invention.

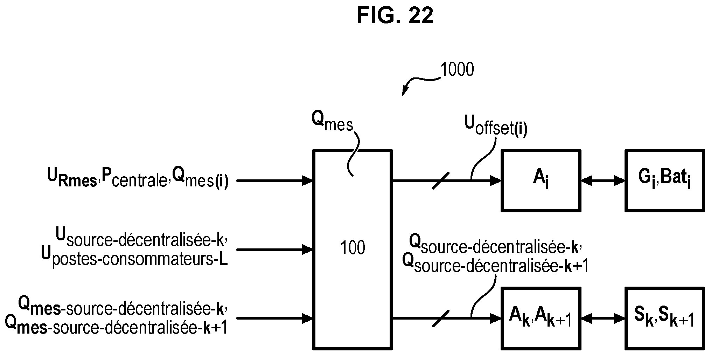

On décrit ci-dessous plus en détail en référence aux figures 9 à 24 des exemples de dispositif 1000 de contrôle d'une (ou plusieurs) unité $G_i$ de génération d'électricité et/ou d'une (ou plusieurs) unité ($Bat_i$) de stockage d'électricité. Ce dispositif 1000 de contrôle est composé d'un premier automate central 100 correspondant à un système de gestion d'énergie (en anglais « energy management system ») ainsi qu'un deuxième automate $A_i$ par unité $G_i$ de production d'électricité et/ou un deuxième automate $A_i$ par unité $Bat_i$ de stockage d'électricité. Dans ce qui suit, l'indice i indique ce qui est prévu pour chaque unité $G_i$ de production d'électricité et/ou un chaque deuxième automate $A_i$ associé à cette unité $G_i$ de production d'électricité ou à cette unité $Bat_i$ de stockage d'électricité. Il peut donc y avoir un ou plusieurs deuxièmes automates $A_i$. Le deuxième automate de chaque unité $G_i$ de production d'électricité ou de chaque unité $Bat_i$ de stockage d'électricité régule la tension interne de cette unité $G_i$ de production d'électricité ou de cette unité $Bat_i$ de stockage d'électricité.

A la figure 9, le microréseau MR peut comporter par exemple :

-    une (ou plusieurs) unité $G_i$ de génération d'électricité, comme par exemple deux unités de génération d'électricité $G_1$ et $G_2$, comportant chacune un (ou plusieurs) conducteur $20_i$ de sortie, servant à l'envoi ou à la réception de courant électrique vers la (ou les) ligne $D_1, D_2,.., D_N$, de transport d'électricité,

-    une (ou plusieurs) unité $Bat_i$ de stockage d'électricité, comportant chacune un (ou plusieurs) conducteur $20_i$ de sortie, servant à l'envoi ou à la réception de courant électrique vers la (ou les) ligne $D_1, D_2,.., D_N$,

-    une (ou plusieurs) borne 10 de connexion (par exemple jeu de barres commun, ou autres), reliée en commun au(x) conducteur(s) $20_i$ de sortie de la (ou des) unité $G_i$ de génération d'électricité et de la (ou des) unité $Bat_i$ de stockage d'électricité,

-    la (ou les) ligne $D_1, D_2,.., D_N$, dont une extrémité (départ de ligne) est connectée à la (ou aux) borne 10 de connexion,

-    une (ou plusieurs) sources $S_k$, $S_{k+1}$ de production d'électricité distribuées (appelées également sources $S_k$, $S_{k+1}$ de production d'électricité décentralisées) le long de la ligne $D_1, D_2,.., D_N$,

-    un (ou plusieurs) postes consommateurs $PC_l$, $PC_{l+1}$, $PC_{l+2}$ d'électricité distribués (appelées également postes consommateurs $PC_l$, $PC_{l+1}$, $PC_{l+2}$ d'électricité décentralisés) le long de la ligne $D_1, D_2,.., D_N$.

Sur chaque départ de ligne de distribution d'électricité, par exemple la ligne $D_1$ de distribution d'électricité ainsi que représenté à la figure 9, les sources $S_k$, $S_{k+1}$ de production d'électricité distribuées sont reliées à la ligne $D_1$ de distribution d'électricité pour pouvoir lui envoyer du courant électrique et ont des nœuds $N_{11}$, $N_{12}$ de connexion à la ligne $D_1$, qui sont distants d'au moins une distance non nulle les uns par rapport aux autres et par rapport à la borne 10 de connexion le long de la ligne $D_1$. Les sources $S_k$, $S_{k+1}$ de production d'électricité distribuées peuvent également être ou comprendre des unités $S_k$, $S_{k+1}$ de stockage d'électricité distribuées.

Sur chaque ligne de distribution d'électricité, par exemple la ligne $D_1$ de transport d'électricité ainsi que représenté à la figure 9, les postes consommateurs $PC_l$, $PC_{l+1}$, $PC_{l+2}$ d'électricité distribués sont reliés à la ligne $D_1$

de transport d'électricité pour pouvoir recevoir de celle-ci du courant électrique et ont des nœuds $N_{13}$, $N_{14}$, $N_{15}$ de connexion à la ligne $D_1$, qui sont distants d'au moins une distance non nulle les uns par rapport aux autres et par rapport à la borne 10 de connexion le long de la ligne $D_1$.

Suivant un mode de réalisation de l'invention, au moins l'une, plusieurs ou toutes les sources $S_k$, $S_{k+1}$ de production d'électricité distribuées peut comprendre par exemple : - une unité de production d'énergie dite fatale, ou intermittente, pouvant comprendre par exemple un ou des panneau(x) photovoltaïque(s), une ou des éolienne(s),

- une unité de stockage d'énergie électrique, pouvant comprendre par exemple une ou des batterie(s) électrique(s) (par exemple, cette unité de stockage d'énergie électrique peut comprendre au moins une batterie électrique et au moins un panneau photovoltaïque connectés à la ligne),

une ou des turbine(s) à combustion.

L'expression "énergie fatale" désigne la quantité d'énergie inéluctablement présente ou piégée dans certains processus ou produits, qui parfois - au moins pour partie - peut être récupérée et/ou valorisée. Le terme « fatal » désigne aussi l'énergie qui serait perdue si on ne l'utilisait pas au moment où elle est disponible, par exemple : l'électricité issue des éoliennes, des panneaux solaires, ou celle produite par les centrales hydrauliques ou marémotrices au fil de l'eau. Le terme « intermittent » désigne le fait que l'unité produit de l'énergie une partie de la journée, comme par exemple un ou des panneau(x) photovoltaïque(s), ou d'une manière irrégulière comme par exemple une ou des éolienne(s). Ces unités de production d'énergie peuvent utiliser de l'énergie renouvelable, comme par exemple le rayonnement solaire pour un ou des panneau(x) photovoltaïque(s), ou la force du vent pour une ou des éolienne(s).

La (ou les) unité $G_i$ de génération d'électricité, la (ou les) unité $Bat_i$ de stockage d'électricité, le (ou les) conducteur $20_i$ de sortie et la (ou les) borne 10 de connexion peuvent être regroupés dans une centrale C de production d'électricité. La borne 10 de connexion est commune à la (ou aux) unité $G_i$ de génération d'électricité et/ou à la (ou aux) unité $Bat_i$ de stockage d'électricité, et au(x) conducteur $20_i$ de sortie, peut être également appelé nœud électrique commun 10 de la centrale C et peut être par exemple un jeu de barres commun de la centrale C de production d'électricité. La centrale comporte par exemple une seule borne 10 de connexion commune ou un seul nœud électrique commun 10.

La (ou les) unité $G_i$ de génération d'électricité peuvent tirer l'électricité qu'elles produisent de moteurs à combustion interne, comme par exemple de moteurs Diesel par l'intermédiaire d'alternateurs et de transformateurs, mais pourraient également être d'un autre type, comme par exemple une centrale de production d'électricité, nucléaire ou au charbon, ou hydroélectrique ou autres.

La (ou les) unité $Bat_i$ de stockage d'électricité peuvent être ou comprendre une (ou plusieurs) batterie $Bat_i$ de stockage d'électricité, pouvant être munie d'un onduleur.

Dans un autre exemple, il peut être prévu seulement une (ou plusieurs) unité $G_i$ de génération d'électricité, sans unité $Bat_i$ de stockage d'électricité.

Dans un autre exemple, il peut être prévu seulement une (ou plusieurs) unité $Bat_i$ de stockage d'électricité, sans unité $G_i$ de génération d'électricité.

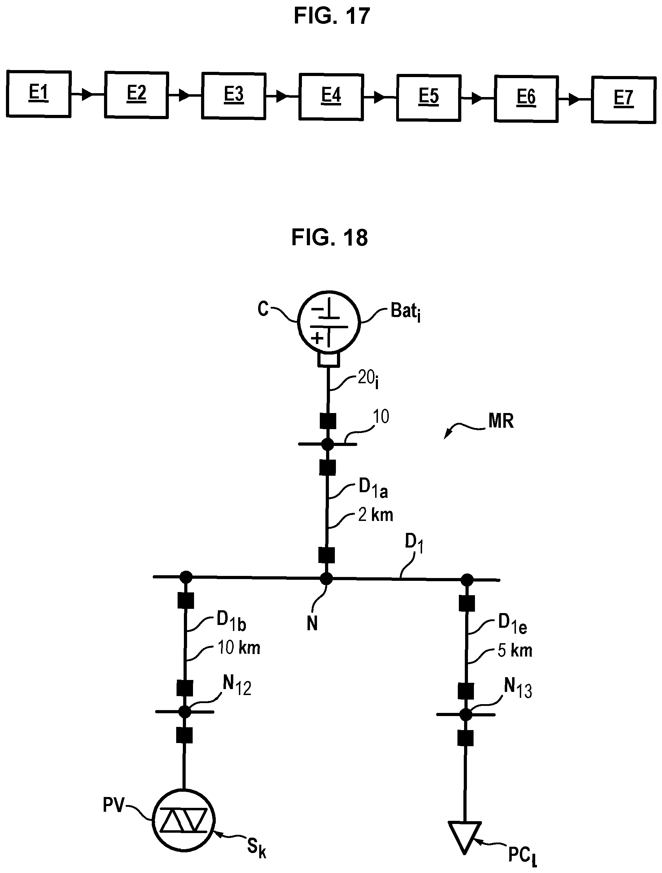

Suivant l'invention, le dispositif 1000 de contrôle de la (ou des) unité $G_i$ de génération d'électricité et/ou de la (ou des) unité $Bat_i$ de stockage d'électricité et le procédé de contrôle de la (ou des) unité $G_i$ de génération d'électricité et/ou de la (ou des) unité $Bat_i$ de stockage d'électricité comportent et utilisent le premier automate 100 de contrôle de la centrale C et le (ou les ) deuxièmes automates $A_i$ de contrôle de l'unité $G_i$ de génération d'électricité (connecté au premier automate 100 de contrôle) et/ou de l'unité $Bat_i$ de stockage d'électricité et est configuré pour calculer (étape E5 à la figure 17) une tension $U_{ref(i)}$ de consigne de chaque unité $G_i$ de génération d'électricité et/ou une tension $U_{ref(i)}$ de consigne de chaque unité $Bat_i$ de stockage d'électricité.

Ainsi que cela est représenté aux figures 9 à 17, 22, 23 et 24, on décrit ci-dessous ce que comportent les automates 100 et $A_i$ de contrôle pour chaque unité $G_i$ de génération d'électricité et/ou chaque unité $Bat_i$ de stockage d'électricité et les étapes mises en œuvre par l'automate 100 de contrôle dans le procédé.

L'automate 100 de contrôle comporte un premier organe 1 de mesure ou de détermination d'une puissance active totale $P_{centrale}$ sortant de la centrale C, fournie ou absorbée par la (ou les) unité $G_i$ de génération d'électricité et/ou la (ou les) unité $Bat_i$ de stockage d'électricité sur la borne 10 de connexion commune (étape E1 effectuée par ce premier organe 1). Dans un mode de réalisation, le premier organe 1 de mesure peut être par exemple un capteur de mesure sur la borne 10 de connexion commune. Dans un autre mode de réalisation, le premier organe 1 de mesure peut utiliser un calculateur additionnant des mesures ou des déterminations des puissances actives individuelles, effectuées par des organes de mesure (capteurs ou autres) ou de détermination (calculateur) faisant partie du ou des deuxièmes automates $A_i$, sur le (ou les) conducteur $20_i$ de sortie de chaque unité $G_i$ de génération d'électricité et/ou de chaque unité $Bat_i$ de stockage d'électricité vers la borne 10 de connexion.

L'automate 100 de contrôle comporte un deuxième organe 2 de mesure ou de détermination d'une tension $U_{Rmes}$ de la borne 10 de connexion commune (pouvant être par exemple un capteur de mesure sur le conducteur $20_i$ de sortie ou sur la borne 10 de connexion commune), à l'étape E2 effectuée par ce deuxième organe 2. Cette tension $U_{Rmes}$ de la borne

10 de connexion commune est donc la tension $U_{Rmes}$ du (ou des) conducteur $20_i$ de sortie de chaque unité $G_i$ de génération d'électricité et/ou de chaque unité $Bat_i$ de stockage d'électricité.

L'automate 100 de contrôle comporte un troisième organe 3 de calcul (par exemple par un calculateur) d'une référence $U_{centraleRef}$ de tension de la borne 10 de connexion commune selon une première fonction prescrite f dépendant au moins de la puissance active totale $P_{centrale}$ (étape E3 effectuée par ce troisième organe 3).

Chaque deuxième automate $A_i$ de contrôle comporte comporte un quatrième organe $4_i$ de mesure ou de détermination d'une puissance réactive individuelle $Q_{mes(i)}$ fournie ou absorbée par l'unité ($G_i$) de génération d'électricité associée à ce deuxième automate ($A_i$) et/ou l'unité ($Bat_i$) de stockage d'électricité associée à ce deuxième automate ($A_i$) vers la borne 10 de connexion commune (étape E4 effectuée par ce quatrième organe 4). Dans un mode de réalisation, le quatrième organe $4_i$ de mesure peut être par exemple un capteur de mesure sur le conducteur $20_i$ de sortie de chaque unité $G_i$ de génération d'électricité et/ou de chaque unité $Bat_i$ de stockage d'électricité vers la borne 10 de connexion.

L'automate 100 de contrôle comporte un premier correcteur 5 de tension, ayant une deuxième fonction de transfert prescrite corr. L'automate 100 de contrôle est configuré pour calculer (étape E5)

$$U_{centraleRef} = f(P_{centrale})$$

$$U_{offset} = corr(U_{centraleRef} - U_{Rmes})$$

où $U_{offset}$ est une première tension de décalage centrale, calculée en appliquant la deuxième fonction de transfert prescrite corr du premier correcteur à la différence $U_{centrateRef} - U_{Rmes}$. L'automate 100 de contrôle est configuré pour calculer au moins une deuxième tension de décalage $U_{offset(i)}$ selon une troisième fonction prescrite $g_i$ dépendant de la première tension de décalage centrale $U_{offse}$. L'automate 100 de contrôle est configuré pour transmettre la (ou les) deuxième tension de décalage $U_{offset(i)}$ au(x) deuxième(s) automate(s) $A_i$ de contrôle pour l'unité $G_i$ de génération d'électricité associée à ce deuxième automate $A_i$ et/ou pour l'unité $Bat_i$ de stockage d'électricité associée à ce deuxième automate $A_i$.

Le premier automate 100 de contrôle central calcule (étape E6) et transmet (étape E6) à chaque deuxième automate $A_i$ de contrôle la tension $U_{offset(i)}$ de décalage de chaque unité $G_i$ de génération d'électricité et/ou de chaque unité $Bat_i$ de stockage d'électricité associée à ce deuxième automate $A_i$ de contrôle, afin que la tension de la borne 10 de connexion commune soit réglée à la référence $U_{centraleRef}$ de tension.

Le (ou les) deuxième(s) automate(s) $A_i$ de contrôle est configuré pour calculer (étape E7) la (ou les) tension $U_{ref(i)}$ de consigne locale pour l'unité $G_i$ de génération d'électricité associée à ce deuxième automate $A_i$ et/ou pour l'unité $Bat_i$)de stockage d'électricité associée à ce deuxième automate ($A_i$), selon $U_{ref(i)} = U_{offset(i)} - K_{UQ(i)}.Q_{mes(i)}$ où $K_{UQ(i)}$ est un coefficient prescrit, non nul.

Suivant un mode de réalisation de l'invention, chaque coefficient $K_{UQ(i)}$ représente une fonction de partage de la première puissance réactive totale $Q_{mes}$ et peut correspondre au ratio de la puissance réactive individuelle $Q_{mes(i)}$ d'une unité $G_i$ de génération d'électricité ou $Bat_i$ de stockage d'électricité par rapport à la première puissance réactive totale $Q_{mes}$, cette fonction de partage étant implémentée dans le (ou les) deuxième automate $A_i$ de contrôle. Cette fonction de partage de la première puissance réactive totale $Q_{mes}$ est associée à la régulation de la tension interne de chaque unité $G_i$ de génération d'électricité et/ou de chaque unité $Bat_i$ de stockage d'électricité, effectué par le deuxième automate $A_i$ de contrôle associé à cette unité.

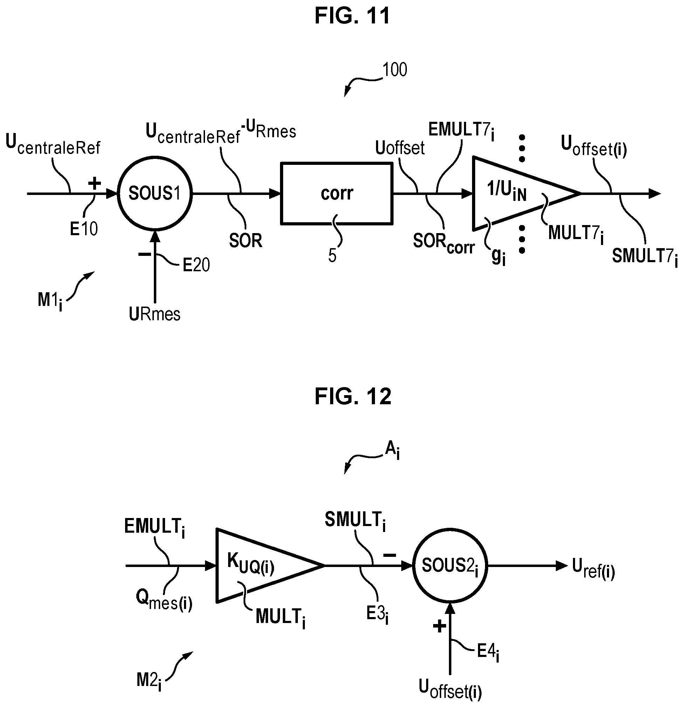

La présente invention permet d'adapter le fonctionnement du réglage secondaire de tension centralisé présenté à la figure 11 afin de minimiser les écarts de tension sur l'ensemble des nœuds du microréseau MR, notamment les nœuds $N_{11}$, $N_{12}$ de connexion des sources $S_k$, $S_{k+1}$ de production d'électricité distribuées et les nœuds $N_{13}$, $N_{14}$, $N_{15}$ de connexion des postes consommateurs $PC_l$, $PC_{l+1}$, $PC_{l+2}$ d'électricité distribués, par rapport à la tension nominale. La référence $U_{centraleRef}$ de tension du réglage secondaire est modulée en fonction de la puissance active totale $P_{centrale}$ et/ou de la première puissance réactive totale $Q_{mes}$ injectée par la centrale C sur le microréseau MR.

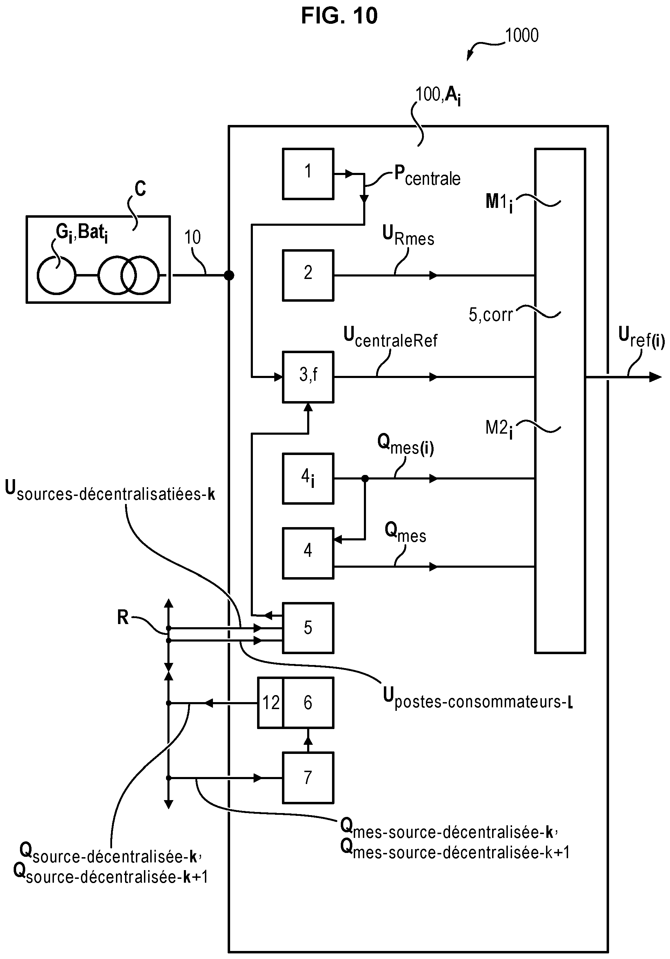

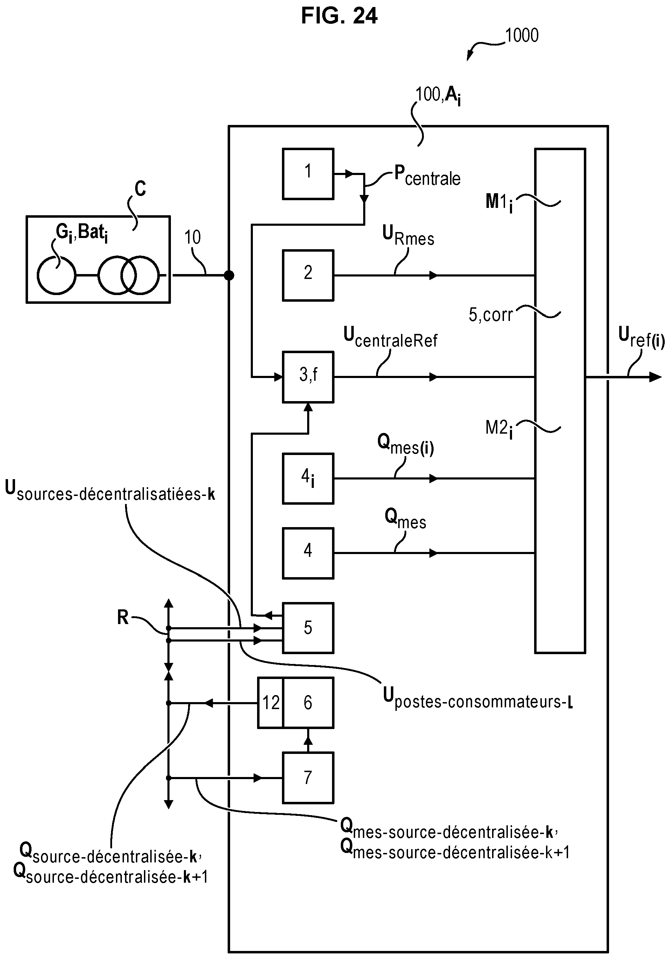

Dans des modes de réalisation de l'invention, représentés aux figures 10 et 24, le premier automate 100 de contrôle central comporte un autre organe 4 de mesure ou de détermination de la première puissance réactive totale $Q_{mes}$ sortant de la centrale C, fournie ou absorbée par l'unité $G_i$ de génération d'électricité et/ou l'unité $Bat_i$ de stockage d'électricité.

Dans un mode de réalisation de l'invention, représenté à la figure 10, l'organe 4 de mesure peut utiliser un calculateur additionnant des mesures ou des déterminations des puissances réactives individuelles $Q_{mes(i)}$, qui ont été effectuées par les organes $4_i$ de mesure (capteurs ou autres) ou de détermination (calculateur) faisant partie du ou des deuxièmes automates $A_i$, sur le (ou les) conducteur $20_i$ de sortie de chaque unité $G_i$ de génération d'électricité et/ou de chaque unité $Bat_i$ de stockage d'électricité vers la borne 10 de connexion.

Dans un mode de réalisation de l'invention, représenté à la figure 24, le premier automate 100 de contrôle central comporte, comme autre organe 4, un autre organe 4 de mesure de la première puissance réactive totale $Q_{mes}$ sortant de la centrale, fournie ou absorbée par l'unité $G_i$ de génération d'électricité et/ou l'unité $Bat_i$ de stockage d'électricité sur la borne

10 de connexion commune.

L'automate 100, le premier module M1$_i$ de calcul et le deuxième module M2$_i$ de calcul, les organes, les correcteurs, filtres, limiteurs et autres éléments décrits ci-dessous, peuvent être réalisés par tous moyens de calcul, pouvant comporter un calculateur, un ordinateur, un ou plusieurs processeurs, un circuit de calcul, un programme d'ordinateur ou autres. L'invention concerne également un programme d'ordinateur comportant des instructions de code pour la mise en œuvre du procédé de contrôle d'au moins une unité G$_i$ de génération d'électricité et/ou d'au moins une unité Bat$_i$ de stockage d'électricité, lorsqu'il est exécuté par l'automate 100 de contrôle. Les éléments décrits ci-dessous peuvent mettent œuvre d'autres étapes du procédé de contrôle, décrites ci-dessous.

Un objet de l'invention est un programme d'ordinateur comportant des instructions de code pour la mise en œuvre d'un procédé de contrôle d'une centrale (C), laquelle comporte au moins une unité (G$_i$) de génération d'électricité et/ou au moins une unité (Bat$_i$) de stockage d'électricité, et au moins une borne (10) de connexion commune, qui est reliée à l'unité (G$_i$) de génération d'électricité et/ou l'unité (Bat$_i$) de stockage d'électricité et qui est destinée à être connectée à au moins une ligne (D$_1$, D$_2$, D$_N$) d'un microréseau (MR) de consommation et/ou de production d'électricité,

procédé dans lequel un automate (100) de contrôle central de l'unité (G$_i$) de génération d'électricité et/ou de l'unité (Bat$_i$) de stockage d'électricité calcule (E5) et transmet au moins une tension U$_{offset(i)}$ de décalage de chaque unité (G$_i$) de génération d'électricité et/ou de chaque unité (Bat$_i$) de stockage d'électricité à au moins un deuxième automate (A$_i$) de contrôle de chaque unité (G$_i$) de génération d'électricité et/ou unité (Bat$_i$) de stockage d'électricité, afin que la tension de la borne (10) de connexion commune soit réglée à une référence U$_{centraleRef}$ de tension,

caractérisé en ce que

on mesure ou détermine (E1) par un premier organe (1) de mesure ou de détermination du premier automate (100) de contrôle central une puissance active totale P$_{centrale}$ sortant de la centrale (C), fournie ou absorbée par l'unité (G$_i$) de génération d'électricité et/ou l'unité (Bat$_i$) de stockage d'électricité,

on mesure (E2) par un deuxième organe (2) de mesure du premier automate (100) de contrôle central une tension U$_{Rmes}$ de la borne (10) de connexion commune,

on calcule (E3) par un troisième organe (3) de calcul du premier automate (100) de contrôle central une référence U$_{centraleRef}$ de tension de la borne (10) de connexion commune selon une première fonction prescrite f dépendant au moins de la puissance active totale P$_{centrale}$,

on mesure ou détermine (E4) par un quatrième organe (4$_i$) de mesure ou de détermination du deuxième automate (A$_i$) de contrôle une première puissance réactive individuelle Q$_{mes(i)}$ fournie ou absorbée par l'unité (G$_i$) de génération d'électricité associée à ce deuxième automate (A$_i$) et/ou par l'unité (Bat$_i$) de stockage d'électricité associée à ce deuxième automate (A$_i$) vers la borne (10) de connexion,

le premier automate (100) de contrôle central ayant un premier correcteur (5) de tension, ayant une deuxième fonction de transfert prescrite corr,

on calcule (E5) par le premier automate (100) de contrôle central

$$U_{centraleRef} = f(P_{centrale})$$

$$U_{offset} = corr(U_{centraleRef} - U_{Rmes})$$

où U$_{offset}$ est une première tension de décalage centrale, calculée en appliquant la deuxième fonction de transfert prescrite corr du premier correcteur à la différence U$_{centrateRef}$ - U$_{Rmes}$,

on calcule (E6) par le premier automate (100) de contrôle la deuxième tension de décalage U$_{offset(i)}$ à partir de la première tension de décalage centrale U$_{offset}$ selon une troisième fonction prescrite (g$_i$) et on transmet par le premier automate (100) de contrôle la deuxième tension de décalage U$_{offset(i)}$ au deuxième automate (A$_i$) de contrôle pour l'unité (G$_i$) de génération d'électricité associée à ce deuxième automate (A$_i$) et/ou pour l'unité (Bat$_i$) de stockage d'électricité associée à ce deuxième automate (A$_i$),

on calcule (E7) par le deuxième automate (A$_i$) de contrôle au moins une tension U$_{ref(i)}$ de consigne locale pour l'unité (G$_i$) de génération d'électricité associée à ce deuxième automate (A$_i$) et/ou pour l'unité (Bat$_i$) de stockage d'électricité associée à ce deuxième automate (A$_i$), selon

$$U_{ref(i)} = U_{offset(i)} - K_{UQ(i)} \cdot Q_{mes(i)}$$

où K$_{UQ(i)}$ est un coefficient prescrit, non nul,

le programme d'ordinateur étant exécuté par le premier automate (100) de contrôle central et par le deuxième automate (A$_i$) de contrôle.

Les figures 11, 22 et 23 montre un exemple de réalisation d'un premier module M1 de calcul de la deuxième tension de décalage $U_{offset(i)}$, où ce premier module $M1_i$ de calcul comporte un premier soustracteur SOUS1 comportant une première entrée additionneuse E10 recevant la référence $U_{centraleRef}$ de tension et une deuxième entrée soustractrive E20 recevant la tension $U_{Rmes}$ de la borne 10 de connexion commune pour fournir sur sa première sortie SOR la différence $U_{centraleRef} - U_{Rmes}$. La sortie SOR est reliée à la troisième entrée du correcteur 5 de la boucle de régulation de tension, lequel calcule sur sa deuxième sortie $SOR_{corr}$ la tension de décalage $U_{offset} = corr(U_{centraleRef} - U_{Rmes})$. La troisième fonction prescrite $g_i$ est ou comprend la division de la première tension de décalage centrale $U_{offset}$ par une tension nominale $U_{iN}$ prescrite de l'unité $G_i$ de génération d'électricité et/ou de l'unité $Bat_i$ de stockage d'électricité, par exemple pour avoir la deuxième tension de décalage $U_{offset(i)}$ égale ou proportionnelle à $U_{offset(i)} = U_{offset} / U_{iN}$. La deuxième sortie $SOR_{corr}$ est reliée à la vingt-quatrième entrée $EMULT7_i$ d'un septième multiplicateur $MULT7_i$ multipliant la première tension de décalage centrale $U_{offset}$ par l'inverse de la tension nominale $U_{iN}$ prescrite pour fournir sur une dix-neuvième sortie S $MULT7_i$ du septième multiplicateur $MULT7_i$ cette deuxième tension de décalage $U_{offset(i)}$.

La figure 12 montre un exemple de réalisation d'un deuxième module $M2_i$ de calcul de la tension $U_{ref(i)}$ de consigne, où ce deuxième module $M2_i$ de calcul comporte un premier multiplicateur $MULT_i$ comportant une quatrième entrée $EMULT_i$ recevant la puissance réactive individuelle $Q_{mes(i)}$ et fournissant sur sa troisième sortie $SMULT_i$ le produit du coefficient prescrit $K_{UQ(i)}$ par la puissance réactive individuelle $Q_{mes(i)}$. La sortie $SMULT_i$ est reliée à une cinquième entrée soustractrive $E3_i$ d'un deuxième soustracteur $SOUS2_i$, dont une sixième entrée additionneuse $E4_i$ reçoit la deuxième tension de décalage $U_{offset(i)}$ et dont la quatrième sortie $SOR_{sous2i}$ fournit la tension $U_{ref(i)}$ de consigne égale à la différence $U_{offset(i)} - K_{uQ(i)}.Q_{mes(i)}$.

Ainsi, $U_{offset(i)}$ est la tension de référence lorsque l'unité $G_i$ de génération d'électricité et/ou l'unité $Bat_i$ de stockage d'électricité ne fournit, ni n'absorbe aucune puissance réactive

$$(\text{cas où } Q_{mes(i)} = 0).$$

Suivant un mode de réalisation de l'invention, la première fonction prescrite f de l'automate 100 dépend au moins :

- de la puissance active totale $P_{centrale}$ sortant de la centrale C, fournie ou absorbée par l'unité $G_i$ de génération d'électricité et/ou l'unité $Bat_i$ de stockage d'électricité sur la borne 10 de connexion commune,
- et de la première puissance réactive totale $Q_{mes}$ sortant de la centrale C, fournie ou absorbée par l'unité $G_i$ de génération d'électricité et/ou l'unité $Bat_i$ de stockage d'électricité sur la borne 10 de connexion commune, selon

$$U_{centraleRef} = f(P_{centrale}, Q_{mes}).$$

Suivant un mode de réalisation de l'invention, la première fonction prescrite f est affine ou linéaire et dépend :

- de la puissance active totale $P_{centrale}$ sortant de la centrale C, fournie ou absorbée par l'unité $G_i$ de génération d'électricité et/ou l'unité $Bat_i$ de stockage d'électricité sur la borne 10 de connexion commune, selon

$$U_{centraleRef} = K_P.P_{centrale} + U_0,$$

où $K_P$ est un deuxième coefficient prescrit non nul,
$U_0$ est un troisième coefficient prescrit.

Suivant un mode de réalisation de l'invention, la première fonction prescrite f est affine ou linéaire et dépend :

- de la puissance active totale $P_{centrale}$ sortant de la centrale C, fournie ou absorbée par l'unité $G_i$ de génération d'électricité et/ou l'unité $Bat_i$ de stockage d'électricité sur la borne 10 de connexion commune,
- et de la première puissance réactive totale $Q_{mes}$ sortant de la centrale C, fournie ou absorbée par l'unité $G_i$ de génération d'électricité et/ou l'unité $Bat_i$ de stockage d'électricité sur la borne 10 de connexion commune, selon

$$U_{centraleRef} = K_P.P_{centrale} + K_Q.Q_{mes} + U_0,$$

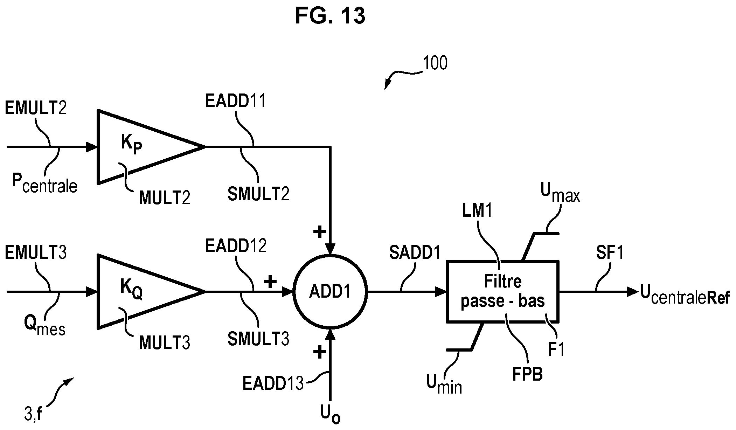

où $K_P$ est un deuxième coefficient prescrit non nul,
$U_0$ est un troisième coefficient prescrit,
$K_Q$ est un quatrième coefficient prescrit non nul, ainsi que cela est représenté à titre d'exemple à la figure 13.

Dans l'exemple de réalisation des figures 13, 22 et 23, le troisième organe 3 de calcul comporte un deuxième multiplicateur MULT2 comportant une septième entrée EMULT2 recevant la puissance active $P_{centrale}$ et fournissant sur sa cinquième sortie SMULT2 le produit du deuxième coefficient prescrit $K_P$ par la puissance active $P_{centrale}$. Le troisième organe 3 de calcul comporte un troisième multiplicateur MULT3 comportant une huitième entrée EMULT3 recevant la puissance réactive $Q_{mes}$ et fournissant sur sa sixième sortie SMULT3 le produit du quatrième coefficient prescrit $K_Q$ par la puissance réactive $Q_{mes}$. Le troisième organe 3 de calcul comporte un premier additionneur ADD1 comportant une neuvième entrée additionneuse EADD11 reliée à la cinquième sortie SMULT2, une dixième entrée additionneuse EADD12 reliée à la huitième entrée EMULT3, une onzième entrée EADD13 recevant le troisième coefficient prescrit $U_0$, et une septième sortie SADD1 fournissant $K_P.P_{centrale} + K_Q.Q_{mes} + U_0$. Le troisième organe 3 de calcul comporte un premier organe de filtrage F1 comportant une douzième entrée EF1 reliée à la septième sortie SADD1. L'organe de filtrage F1 peut comporter un premier limiteur LIM1 limitant sur la huitième sortie SF1 de l'organe de filtrage F1 les valeurs $K_P.P_{centrale} + K_Q.Q_{mes} + U_0$ à des valeurs, qui sont supérieures ou égales à une valeur minimale $U_{min}$ de tension strictement positive, prescrite et qui sont inférieures ou égales à une valeur maximale $U_{max}$ de tension strictement positive, prescrite, comme référence $U_{centraleRef}$ de tension. La valeur maximale $U_{max}$ de tension strictement positive est supérieure à la valeur minimale $U_{min}$ de tension strictement positive. L'organe de filtrage F1 peut comporter un premier filtre passe-bas FPB1 fournissant les valeurs $K_P.P_{centrale} + K_Q.Q_{mes} + U_0$ filtrées par une première fonction de filtrage passe-bas prescrite sur la huitième sortie SF1 de l'organe de filtrage F1 comme référence $U_{centraleRef}$ de tension. L'organe de filtrage F1 peut comporter à la fois le premier limiteur LIM1 et le premier filtre passe-bas FPB1 pour fournir sur la huitième sortie SF1 de l'organe de filtrage F1 les valeurs $K_P.P_{centrale} + K_Q.Q_{mes} + U_0$ à la fois limitées par le premier limiteur LIM1 et filtrées par le premier filtre passe-bas FPB1 sur la huitième sortie SF1 du premier limiteur LIM1 comme référence $U_{centraleRef}$ de tension.

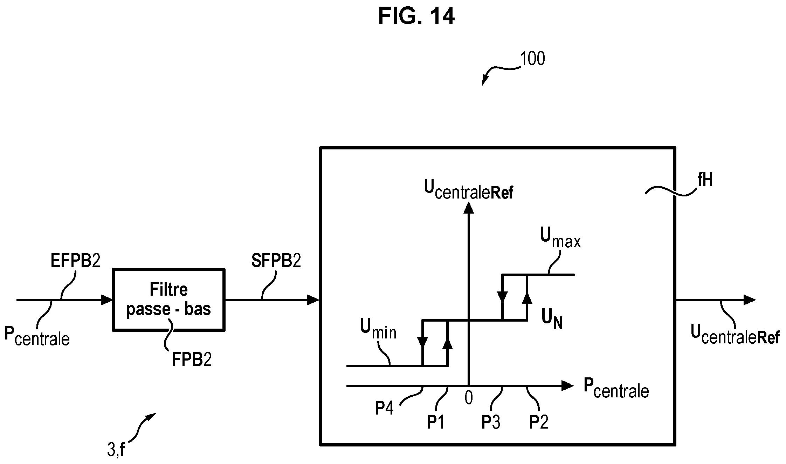

Suivant un mode de réalisation de l'invention, aux figures 14, 22 et 23, la première fonction prescrite f comprend une fonction hystérésis fH ayant trois paliers différents de référence $U_{centraleRef}$ de tension (à savoir soit la valeur minimale prescrite $U_{min}$ de tension, soit la valeur maximale prescrite $U_{max}$ de tension, soit la valeur nominale $U_N$ de tension prescrite, laquelle est supérieure à la valeur minimale prescrite $U_{min}$ de tension et est inférieure à la valeur maximale prescrite $U_{max}$) de tension, selon les valeurs croissantes ou décroissantes de la puissance active totale $P_{centrale}$ sortant de la centrale C, fournie ou absorbée par l'unité $G_i$ de génération d'électricité et/ou l'unité $Bat_i$ de stockage d'électricité sur la borne 10 de connexion commune. La fonction hystérésis fH est utile par exemple si les coefficients de la fonction linéaire ou affine décrite ci-dessus n'ont pas pu être déterminés ou si les performances ne sont pas satisfaisantes.

Suivant la fonction hystérésis fH, lorsque les valeurs de la puissance active totale $P_{centrale}$ augmentent au cours du temps et deviennent supérieures ou égales à une première valeur strictement négative prescrite $P_1$ de puissance active en restant inférieures à une deuxième valeur strictement positive prescrite $P_2$ de puissance active, la référence $U_{centraleRef}$ de tension prend la valeur nominale $U_N$ de tension strictement positive et prescrite (premier cas).

Suivant la fonction hystérésis fH, tant que les valeurs de la puissance active totale $P_{centrale}$ augmentent au cours du temps et restent inférieures à la première valeur strictement négative prescrite $P_1$ de puissance, la référence $U_{centraleRef}$ de tension prend la valeur minimale $U_{min}$ de tension strictement positive et prescrite (deuxième cas).

Suivant la fonction hystérésis fH, lorsque les valeurs de la puissance active totale $P_{centrale}$ augmentent au cours du temps et sont supérieures à la deuxième valeur strictement positive prescrite $P_2$ de puissance active, la référence $U_{centraleRef}$ de tension prend la valeur maximale $U_{max}$ de tension strictement positive et prescrite (troisième cas).

Suivant la fonction hystérésis fH, lorsque les valeurs de la puissance active totale $P_{centrale}$ diminuent au cours du temps et deviennent inférieures ou égales à une troisième valeur strictement négative prescrite $P_3$ de puissance active en restant supérieures à une quatrième valeur $P_4$ strictement positive prescrite de puissance active, la référence $U_{centraleRef}$ de tension prend la valeur nominale $U_N$ de tension strictement positive et prescrite (quatrième cas). Le premier cas et le quatrième cas correspondent par exemple au fait que lorsque l'injection ou l'absorption de puissance active totale $P_{centrale}$ est faible, la chute ou l'élévation de tension sur le microréseau MR restera limitée et la tension secondaire $U_{centraleRef}$ sera maintenue à sa valeur nominale $U_N$.

Suivant la fonction hystérésis fH, lorsque les valeurs de la puissance active totale $P_{centrale}$ diminuent au cours du temps et sont inférieures à la quatrième valeur $P_4$ strictement positive prescrite de puissance active, la référence $U_{centraleRef}$ de tension prend la valeur minimale $U_{min}$ de tension strictement positive et prescrite (cinquième cas). Le deuxième cas et le cinquième cas correspondent par exemple au fait que lorsque l'absorption de puissance active totale $P_{centrale}$ est importante, c'est-à-dire en cas de forte production des sources distribuées $S_k$, $S_{k+1}$, la référence de tension secondaire $U_{centraleRef}$ sera la valeur basse $U_{min}$.

Suivant la fonction hystérésis fH, tant que les valeurs de la puissance active totale $P_{centrale}$ diminuent au cours du temps et restent supérieures à la troisième valeur strictement positive prescrite $P_3$ de puissance active, la référence $U_{centraleRef}$ de tension prend la valeur maximale $U_{max}$ de tension strictement positive et prescrite (sixième cas). Le troisième cas et le sixième cas correspondent par exemple au fait que lorsque l'injection de puissance active totale $P_{centrale}$ est importante, typiquement lors de la pointe de consommation journalière des postes consommateurs $PC_I$, $PC_{I+1}$, $PC_{I+2}$ d'électricité distribués, la référence de tension secondaire $U_{centraleRef}$ sera la valeur haute $U_{max}$.

Suivant un mode de réalisation de l'invention, la troisième valeur strictement positive prescrite $P_3$ de puissance active est inférieure à la deuxième valeur strictement positive prescrite $P_2$ de puissance active.

Suivant un mode de réalisation de l'invention, la quatrième valeur strictement négative prescrite $P_4$ de puissance active étant inférieure à la première valeur strictement négative prescrite $P_1$ de puissance active.

Suivant un mode de réalisation de l'invention, aux figures 14, 22 et 23, le troisième organe 3 de calcul comporte un deuxième filtre passe-bas FPB2 comportant une treizième entrée EFPB2 recevant la puissance active totale $P_{centrale}$ et fournissant sur sa neuvième sortie SFPB2 la puissance active totale $P_{centrale}$ filtrée par une deuxième fonction de filtrage passe-bas prescrite. La neuvième sortie SFPB2 est reliée à la fonction hystérésis fH laquelle reçoit au lieu de la puissance active totale $P_{centrale}$ la puissance active totale $P_{centrale}$ ayant été filtrée par une deuxième fonction de filtrage passe-bas prescrite du deuxième filtre passe-bas FPB2.

Suivant un mode de réalisation de l'invention, aux figures 10, 22, 23 et 24, l'automate 100 de contrôle comporte en outre au moins un cinquième organe 5 de réception pour recevoir :

- des premières valeurs $U_{sources-décentralisées-k}$ de télémesure de tension respectivement de sources $S_k$, $S_{k+1}$ de production d'électricité décentralisées (ou distribuées) de la ligne $D_1$, $D_2$,.., $D_N$ du microréseau MR de consommation et/ou de production d'électricité, distantes d'au moins une distance non nulle (nœuds de connexion $N_{11}$, $N_{12}$) les unes par rapport aux autres et par rapport à la borne 10 de connexion commune de la centrale C,
- des deuxièmes valeurs $U_{postes-consommateurs-l}$ de télémesure de tension respectivement de postes consommateurs $PC_l$, $PC_{l+1}$, $PC_{l+2}$ d'électricité décentralisés (ou distribués) de la ligne $D_1$, $D_2$,.., $D_N$ du microréseau MR de consommation et/ou de production d'électricité, distants d'au moins une distance non nulle (nœuds de connexion $N_{13}$, $N_{14}$, $N_{15}$) les uns par rapport aux autres et par rapport à la borne 10 de connexion commune de la centrale C.

Suivant un mode de réalisation de l'invention, aux figures 9, 10, 22, 23 et 24, les sources $S_k$, $S_{k+1}$ de production d'électricité décentralisées peuvent chacune être munies d'un septième organe $7_k$, $7_{k+1}$ de mesure (par exemple capteur de mesure) ou de détermination de leur première valeur $U_{sources-décentralisées-k}$ de télémesure de tension respective et d'un huitième organe $8_k$, $8_{k+1}$ de télécommunication (par exemple transmetteur) pour transmettre par un réseau de télécommunication R ces premières valeurs $U_{sources-décentralisées-k}$ de télémesure de tension au cinquième organe 5 de réception (qui est par exemple un récepteur de télécommunication).

Suivant un mode de réalisation de l'invention, aux figures 9, 10, 22, 23 et 24, les postes consommateurs $PC_l$, $PC_{l+1}$, $PC_{l,2}$ d'électricité décentralisés peuvent chacun être munis d'un neuvième organe $9_l$, $9_{l+1}$, $9_{l+2}$ de mesure (par exemple capteur de mesure) ou de détermination de leur deuxième valeur $U_{postes-consommateurs-l}$ de télémesure de tension respective et d'un dixième organe $10_l$, $10_{l+1}$, $10_{l+2}$ de télécommunication (par exemple transmetteur) pour transmettre par un réseau de télécommunication R ces deuxièmes valeurs $U_{postes-consommateurs-l}$ de télémesure de tension au cinquième organe 5 de réception.

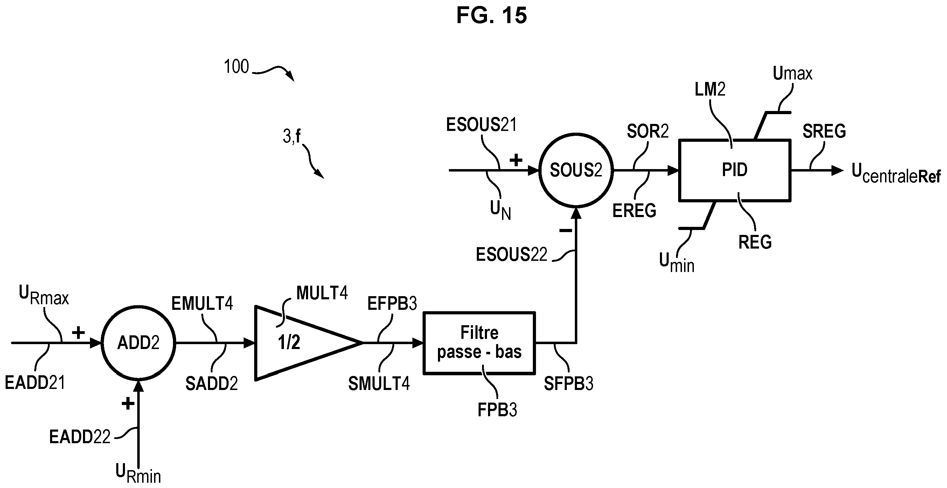

Suivant un mode de réalisation de l'invention, aux figures 15, 22 et 23, la première fonction prescrite f comporte :

- le calcul d'un maximum $U_{Rmax}$ de tension entre la tension $U_{Rmes}$ de la borne (10) de connexion commune de la centrale C et les premières valeurs $U_{sources-décentralisées-k}$ de télémesure de tension des sources $S_k$, $S_{k+1}$ de production d'électricité décentralisées, c'est-à-dire

$$U_{Rmax} = \max(U_{Rmes}, U_{sources-décentralisées-k}),$$

- le calcul d'un minimum $U_{Rmin}$ de tension entre la tension $U_{Rmes}$ de la borne (10) de connexion commune de la centrale et les deuxièmes valeurs $U_{postes-consommateurs-l}$ de télémesure de tension des postes consommateurs $PC_l$, $PC_{l+1}$, $PC_{l+2}$ d'électricité décentralisés, c'est-à-dire

$$U_{Rmin} = \min(U_{Rmes}, U_{postes-consommateurs-l}),$$

- la prise en compte de la demi-somme du maximum $U_{Rmax}$ de tension et du minimum $U_{Rmin}$ de tension pour le calcul de la référence $U_{centraleRef}$ de tension.

Cela permet de tenir compte des tensions les plus basses et les plus élevées des sources distribuées $S_k$, $S_{k+1}$ et des postes consommateurs distribués $PC_l$, $PC_{l+1}$, $PC_{l+2}$ pour calculer la référence $U_{centraleRef}$ de tension optimale. En effet, la tension maximale $U_{Rmax}$ sur le microréseau correspond nécessairement à celle d'une source distribuée fournissant de la puissance active d'après les équations du premier type mentionnées ci-dessus. La tension minimale $U_{Rmin}$ sur le microréseau correspond nécessairement à celle d'un poste consommateur distribué absorbant de la puissance active d'après les équations du premier type mentionnées ci-dessus. Cette fonction, qui correspond à une boucle externe de régulation pour le réglage secondaire, a pour objectif de centrer la tension du microréseau MR à sa valeur nominale $U_N$. En effet, lorsque le deuxième correcteur PID REG a annulé l'erreur statique de cette boucle externe, la référence $U_{centraleRef}$ de tension permet d'obtenir $\frac{U_{Rmax} + U_{Rmin}}{2} = U_N$

Suivant un mode de réalisation de l'invention, aux figures 15, 22 et 23, le troisième organe 3 de calcul comporte un deuxième additionneur ADD2 comportant une quatorzième entrée additionneuse EADD21 recevant le maximum $U_{Rmax}$ de tension, une quinzième entrée additionneuse EADD22 recevant le minimum $U_{Rmin}$ de tension, et une dixième sortie SADD2 fournissant la somme du maximum $U_{Rmax}$ de tension et du minimum $U_{Rmin}$ de tension. Le troisième organe 3 de calcul comporte un quatrième multiplicateur MULT4 comportant une seizième entrée EMULT4 reliée à la dixième sortie SADD2 et fournissant sur sa onzième sortie SMULT4 la demi-somme du maximum $U_{Rmax}$ de tension et du minimum $U_{Rmin}$ de tension.

Suivant un mode de réalisation de l'invention, aux figures 15, 22 et 23, le troisième organe 3 de calcul comporte un deuxième correcteur REG du type proportionnel, intégrateur et dérivateur (PID), fournissant sur sa douzième sortie SREG la référence $U_{centraleRef}$ de tension à partir de la différence entre d'une part la tension nominale prescrite $U_N$ et d'autre part la demi-somme du maximum $U_{Rmax}$ de tension et du minimum $U_{Rmin}$ de tension, cette différence étant appliquée à une dix-septième entrée EREG du deuxième correcteur REG.

Suivant un mode de réalisation de l'invention, aux figures 15, 22 et 23, le troisième organe 3 de calcul comporte un deuxième limiteur LIM2 limitant sur la douzième sortie SREG du deuxième correcteur REG les valeurs de la référence $U_{centraleRef}$ de tension à des valeurs, qui sont supérieures ou égales à la valeur minimale $U_{min}$ de tension strictement positive, prescrite et qui sont inférieures ou égales à la valeur maximale $U_{max}$ de tension strictement positive, prescrite.

Suivant un mode de réalisation de l'invention, aux figures 15, 22 et 23, le troisième organe $3_i$ de calcul comporte un deuxième soustracteur SOUS2 comportant une dix-huitième entrée additionneuse ESOUS21 recevant la tension nominale prescrite $U_N$ et une dix-neuvième entrée soustractrive ESOUS22 recevant la demi-somme du maximum $U_{Rmax}$ de tension et du minimum $U_{Rmin}$ de tension, pour fournir sur sa neuvième sortie SOR2 la différence entre d'une part la tension nominale prescrite $U_N$ et d'autre part la demi-somme du maximum $U_{Rmax}$ de tension et du minimum $U_{Rmin}$ de tension. La neuvième sortie SOR2 est reliée à la dix-septième entrée EREG du deuxième correcteur REG.

Suivant un mode de réalisation de l'invention, aux figures 15, 22 et 23, le troisième organe 3 de calcul peut comporter un troisième filtre passe-bas FPB3 dont la vingtième entrée EFPB3 est reliée à la onzième sortie SMULT4 pour recevoir la demi-somme du maximum $U_{Rmax}$ de tension et du minimum $U_{Rmin}$ de tension. Le troisième filtre passe-bas FPB3 comporte une treizième sortie SFPB3 fournissant la demi-somme du maximum $U_{Rmax}$ de tension et du minimum $U_{Rmin}$ de tension, filtrée par une troisième fonction de filtrage passe-bas prescrite. La treizième sortie SFPB3 est reliée à la dix-neuvième entrée soustractrive ESOUS22.

Suivant un mode de réalisation de l'invention, aux figures 9, 10, 16, 22, 23 et 24, l'automate 100 de contrôle comporte un sixième organe 6 de calcul de consignes respectives $Q_{source-décentralisée-k}$, $Q_{source-décentralisée-k+1}$ de puissance réactive pour les sources correspondantes $S_k$, $S_{k+1}$ de production d'électricité décentralisées. Ces consignes respectives $Q_{source-décentralisée-k}$, $Q_{source-décentralisée-k+1}$ **sont des** proportions $r_k$, $r_{k+1}$ au moins de la première puissance réactive totale $Q_{mes}$ sortant de la centrale C, fournie ou absorbée par l'unité $G_i$ de génération d'électricité et/ou l'unité $Bat_i$ de stockage d'électricité sur la borne 10 de connexion commune (en pouvant donc ajouter d'autres puissances réactives mesurées, ainsi que décrit ci-dessous). L'automate 100 de contrôle peut comporter un douzième organe 12 de télécommunication (par exemple transmetteur) pour transmettre par un réseau de télécommunication R ces consignes respectives $Q_{source-décentralisée-k}$, $Q_{source-décentralisée-k+1}$ aux sources correspondantes $S_k$, $S_{k+1}$ de production d'électricité décentralisées (pouvant avoir un treizième organe $13_k$, $13_{k+1}$ de réception (par exemple un récepteur de télécommunication)) recevant ces consignes respectives $Q_{source-décentralisée-k}$, $Q_{source-décentralisée-k+1}$ par le réseau de télécommunication R sur leur troisième automate $A_k$ de contrôle. Le troisième automate $A_k$, $A_{k+1}$ de contrôle de chaque source $S_k$, $S_{k+1}$ de production d'électricité décentralisée régule la tension interne de cette source $S_k$, $S_{k+1}$ de production d'électricité décentralisée.

Suivant un mode de réalisation de l'invention, aux figures 9, 10, 16, 22, 23 et 24, l'automate 100 de contrôle comporte un septième organe 7 de réception pour recevoir des troisièmes valeurs respectives $Q_{mes-source-décentralisée-k}$, $Q_{mes-source-décentralisée-k+1}$ de télémesure de puissance réactive des sources respectives $S_k$, $S_{k+1}$ de production d'électricité décentralisées. Le sixième organe 6 de calcul est configuré pour calculer une deuxième puissance réactive totale $Q_{microréseau}$ égale à la somme algébrique SPR de la première puissance réactive totale $Q_{mes}$ sortant de la centrale C, fournie ou absorbée par l'unité $G_i$ de génération d'électricité et/ou l'unité $Bat_i$ de stockage d'électricité sur la borne 10 de connexion et des troisièmes valeurs respectives $Q_{mes-source-décentralisée-k}$, $Q_{mes-source-décentralisée-k+1}$ de télémesure de puissance réactive (absorbée ou injectée) des sources respectives $S_k$, $S_{k+1}$ de production d'électricité distribuées. Le sixième organe 6 de calcul est configuré pour calculer les consignes respectives $Q_{source-décentralisée-k}$, $Q_{source-décentralisée-k+1}$ de puissance réactive des sources respectives $S_k$, $S_{k+1}$ de production d'électricité décentralisées comme étant des proportions $r_k$, $r_{k+1}$ de ladite somme SPR, $Q_{microréseau}$ c'est-à-dire

$$Q_{\text{source-décentralisée-k}} = r_k \cdot Q_{\text{microréseau}},$$

$$Q_{\text{source-décentralisée-k+1}} = r_{k+1} \cdot Q_{\text{microréseau}},$$

avec

$$0 \leq r_k \leq 1,$$

$$0 \leq r_{k+1} \leq 1,$$

et la somme des $r_k$, $r_{k+1}$ étant égale à 1.

Cela permet ainsi la participation des sources de production d'électricité distribuées $S_k$, $S_{k+1}$ à la fourniture de puissance réactive d'une manière efficace. Par défaut, l'intégralité de la puissance réactive $Q_{\text{mes}(i)}$ sera fournie ou absorbée par l'unité $G_i$ de génération d'électricité et/ou de l'unité $Bat_i$ de stockage d'électricité.

Suivant un mode de réalisation de l'invention, aux figures 9 et 10, 22, 23 et 24, les sources $S_k$, $S_{k+1}$ de production d'électricité décentralisées peuvent chacune être munies d'un onzième organe $11_k$, $11_{k+1}$ de mesure (par exemple capteur de mesure) ou de détermination de leur troisième valeur respective $Q_{\text{mes-source-décentralisée-k}}$, $Q_{\text{mes-source-décentralisée-k+1}}$ de télémesure de puissance réactive et d'un huitième organe $8_k$, $8_{k+1}$ de télécommunication (par exemple transmetteur) pour transmettre par un réseau de télécommunication R ces troisièmes valeurs respectives $Q_{\text{mes-source-décentralisée-k}}$, $Q_{\text{mes-source-décentralisée-k+1}}$ de télémesure de puissance réactive au septième organe 7 de réception (qui a par exemple un récepteur de télécommunication).

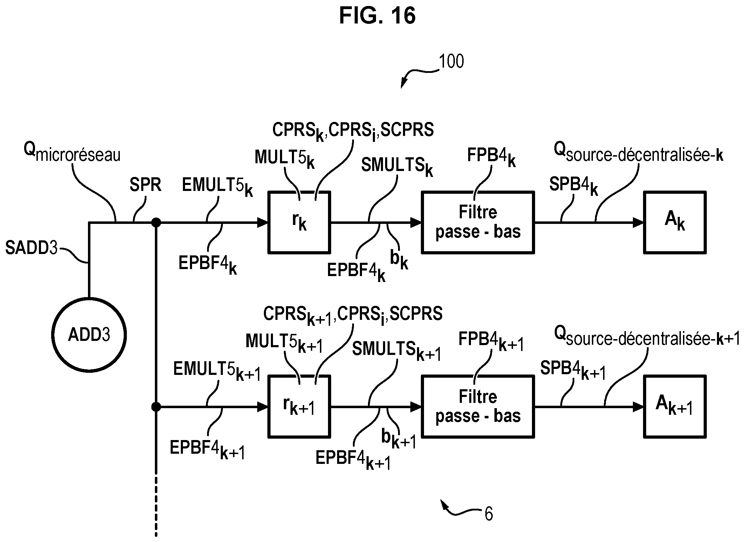

Suivant un mode de réalisation de l'invention, aux figures 16, 22 et 23, les proportions $r_k$, $r_{k+1}$ dans les consignes respectives $Q_{\text{source-décentralisée-k}}$, $Q_{\text{source-décentralisée-k+1}}$ de puissance réactive des sources respectives $S_k$, $S_{k+1}$ de production d'électricité distribuées correspondent à des ratios respectifs $r_k$, $r_{k+1}$ d'une capacité prescrite respective $CPRS_k$, $CPRS_{k+1}$ en puissance réactive de la source respective $S_k$, $S_{k+1}$ de production d'électricité distribuée, divisée par la somme SCPRS des capacités prescrites respectives $CPRS_k$, $CPRS_{k+1}$ en puissance réactive des sources respectives $S_k$, $S_{k+1}$ de production d'électricité distribuées et des capacités prescrites respectives CPRS; en puissance réactive de la (ou des) unité $G_i$ de génération d'électricité et/ou de la (ou des) unité $Bat_i$ de stockage d'électricité, c'est-à-dire

$$r_k = CPRS_k \ / \ SCPRS,$$

$$r_{k+1} = CPRS_{k+1} \ / \ SCPRS.$$

Suivant un mode de réalisation de l'invention, aux figures 16, 22 et 23, le sixième organe 6 de calcul comporte un troisième additionneur ADD3 recevant sur ses entrées la première puissance réactive totale $Q_{\text{mes}}$ sortant de la centrale C, fournie ou absorbée par l'unité $G_i$ de génération d'électricité et/ou l'unité $Bat_i$ de stockage d'électricité sur la borne 10 de connexion commune t les troisièmes valeurs respectives $Q_{\text{mes-source-décentralisée-k}}$, $Q_{\text{mes-source-décentralisée-k+1}}$ de télémesure de puissance réactive, et comportant une quatorzième sortie SADD3 fournissant la somme algébrique SPR de la première puissance réactive totale $Q_{\text{mes}}$ sortant de la centrale C, fournie ou absorbée par l'unité $G_i$ de génération d'électricité et/ou l'unité $Bat_i$ de stockage d'électricité sur la borne 10 de connexion commune et des troisièmes valeurs respectives $Q_{\text{mes-source-décentralisée-k}}$, $Q_{\text{mes-source-décentralisée-k+1}}$ de télémesure de puissance réactive (absorbée ou injectée) des sources respectives $S_k$, $S_{k+1}$ de production d'électricité distribuées. Le sixième organe 6 de calcul comporte des branches $b_k$, $b_{k+1}$ respectives de calcul des consignes respectives $Q_{\text{source-décentralisée-k}}$, $Q_{\text{source-décentralisée-k+1}}$ de puissance réactive des sources respectives $S_k$, $S_{k+1}$ de production d'électricité distribuées. Chaque branche $b_k$ respective de calcul comporte un cinquième multiplicateur $MULT5_k$ comportant une vingt-et-unième entrée $EMULT5_k$ reliée à la quatorzième sortie SADD3 et fournissant sur sa quinzième sortie $SMULT5_k$ le produit $r_k.SPR$. Chaque branche $b_{k+1}$ respective de calcul comporte un sixième multiplicateur $MULT5_{k+1}$ comportant une vingt-deuxième entrée $EMULT5_{k+1}$ reliée à la quatorzième sortie SADD3 et fournissant sur sa seizième sortie $SMULT5_{k+1}$ le produit $r_{k+1}.SPR$. Le sixième organe 6 de calcul peut comporter un quatrième filtre passe-bas $FPB4_k$ dont la vingt-deuxième entrée $EFPB4_k$ est reliée à la quinzième sortie $SMULT5_k$ pour recevoir le produit $r_k.SPR$. Le quatrième filtre passe-bas $FPB4_k$ comporte une dix-septième sortie $SFPB4_k$ fournissant le produit $r_k.SPR$, filtré par une quatrième fonction de filtrage passe-bas prescrite en tant que consigne respective $Q_{\text{source-décentralisée-k}}$ de puissance réactive de la source respective $S_k$ de production d'électricité distribuée. Le sixième organe 6 de calcul peut comporter un cinquième filtre passe-bas $FPB4_{k+1}$ dont la vingt-troisième entrée $EFPB4_{k+1}$ est reliée à la seizième sortie $SMULT5_{k+1}$ pour recevoir le produit $r_{k+1}.SPR$. Le cinquième filtre passe-bas $FPB4_{k+1}$ comporte une dix-huitième sortie $SFPB4_{k+1}$ fournissant le produit $r_{k+1}.SPR$, filtré par une cinquième fonction de filtrage passe-bas prescrite en tant que consigne respective $Q_{source-décentralisée-k+1}$ de puissance réactive de la source respective $S_{k+1}$ de production d'électricité distribuée.

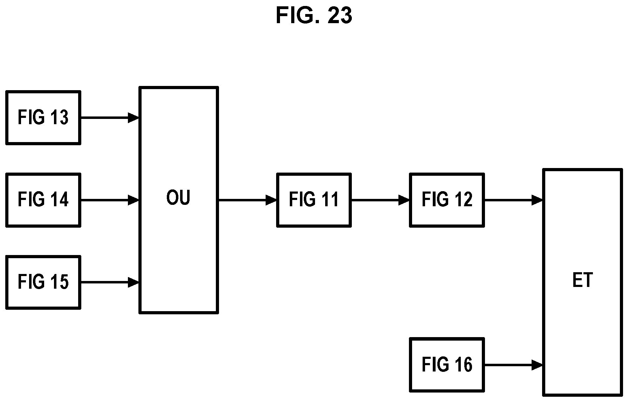

La figure 23 illustre une architecture des modes de réalisation de l'invention des figures 11 à 16, comportant le mode de réalisation de la FIG 13 ou le mode de réalisation de la FIG 14 ou le mode de réalisation de la FIG15 (fonction OU à la figure 23), combiné avec le mode de réalisation de la FIG 11, avec le mode de réalisation de la FIG 12 et avec le mode de réalisation de la FIG 16 (fonction ET à la figure 23).

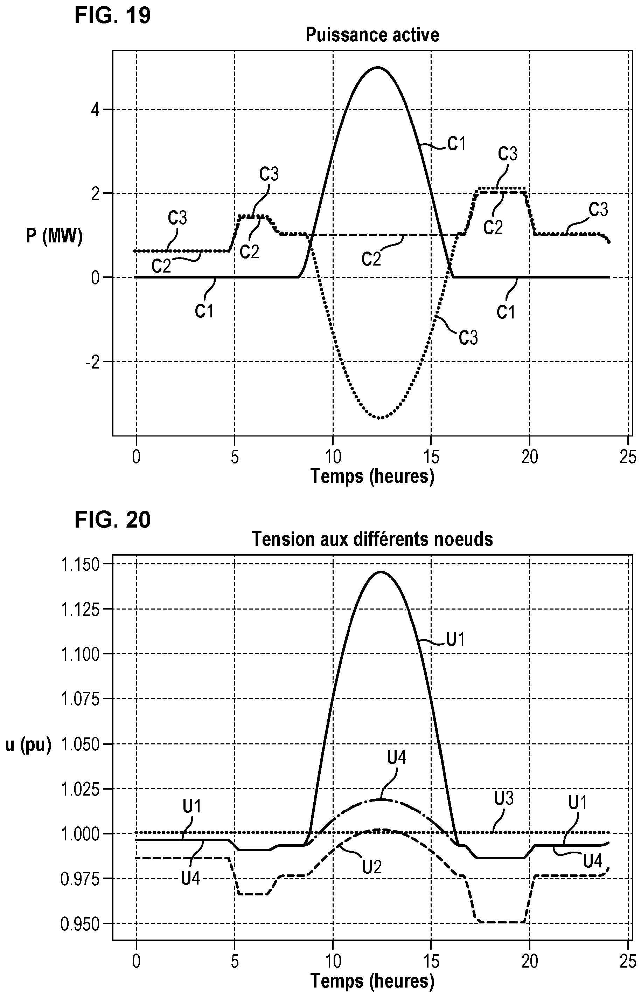

Les figures 18 à 21 illustrent une simulation numérique en valeur efficace d'un exemple de microréseau MR, dont la centrale C comporte une unité $Bat_i$ de stockage d'électricité formée par une batterie $Bat_i$, dont le conducteur $20_i$ de sortie est relié à la borne 10 de connexion commune, elle-même reliée par un premier tronçon $D_{1a}$ de 2 km de longueur de la ligne $D_1$ de transport d'électricité à un nœud N, lequel est relié par un deuxième tronçon $D_{1b}$ de 10 km de longueur de la ligne $D_1$ de transport d'électricité à la source respective $S_k$ de production d'électricité décentralisée de type photovoltaïque (PV) et est relié par un troisième tronçon $D_{1c}$ de 5 km de longueur de la ligne $D_1$ de transport d'électricité au poste consommateur $PC_l$ d'électricité décentralisé. La tension nominale $U_{N(i)}$ de ce microréseau MR est de 20 kV. La puissance installée de cette source respective $S_k$ de production d'électricité décentralisée de type photovoltaïque (PV) est de 5 MW. La charge (Pn / cos(phin)) de ce poste consommateur $PC_l$ d'électricité décentralisé est de 2 MW / 0,9. Ces tronçons $D_{1a}$, $D_{1b}$, $D_{1c}$ de la ligne $D_1$ de transport d'électricité sont des câbles de type Phlox 37,7mm$^2$ (R/X) de1,176 Ohms/km / 0,399 Ohms/km. Cette batterie $Bat_i$ a une énergie et une puissance non limitées pendant les simulations. La figure 19 montre, au cours du temps en abscisses, le profil de la puissance active (courbe C1) de la source respective $S_k$ de production d'électricité décentralisée de type photovoltaïque (PV), le profil de la puissance active (courbe C2) du poste consommateur $PC_l$ d'électricité décentralisé et le profil de la puissance active (courbe C3) de la batterie $Bat_i$.

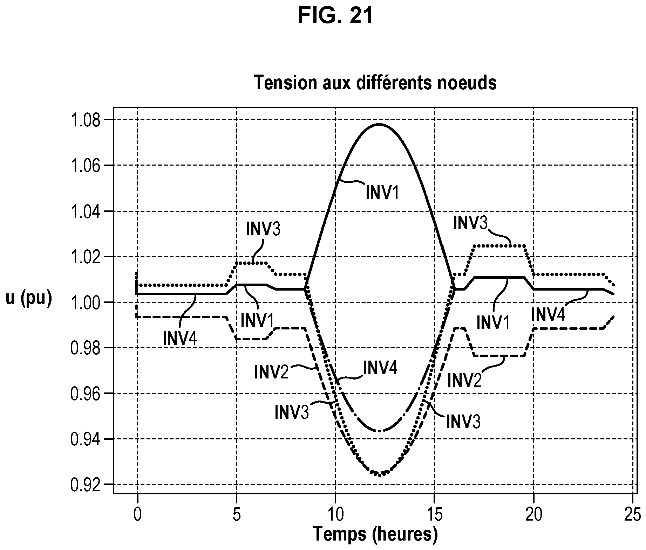

Deux scénarios ont été simulés et comparés : le premier scénario de la figure 20 dans lequel la tension de la centrale C est tenue à sa valeur nominale $U_N$ par la batterie $Bat_i$ via un algorithme de réglage secondaire centralisé connu et le deuxième scénario de la figure 21 utilisant la présente invention dans lequel la référence de tension $U_{centraleRef}$ du réglage secondaire est calculée via la première fonction prescrite f affine $U_{centrateRef(} = K_P.P_{centrale(} + K_Q.Q_{centrale} + U_0$, décrite ci-dessus, avec dans cet exemple $K_P = 0.392$ kV/MW, $K_Q = -0.385$ kV/Mvar et $U_0 = 20$ kV.

La figure 20 montre, au cours du temps en abscisses, la tension au nœud $N_{12}$ (courbe U1) de la source respective $S_k$ de production d'électricité décentralisée de type photovoltaïque (PV), la tension au nœud $N_{13}$ (courbe U2) du poste consommateur $PC_l$ d'électricité décentralisé, la tension sur la borne 10 de connexion (courbe U3) de la batterie $Bat_i$ et la tension du nœud commun N (courbe U4) dans le premier scénario. A la figure 20, la tension en ordonnée est exprimée en valeur réduite (u(pu)) correspondant à U / 20 kV.

La figure 21 montre, au cours du temps en abscisses, la tension au nœud $N_{12}$ (courbe INV1) de la source respective $S_k$ de production d'électricité décentralisée de type photovoltaïque (PV), la tension au nœud $N_{13}$ (courbe INV2) du poste consommateur $PC_l$ d'électricité décentralisé, la tension sur la borne 10 de connexion (courbe INV3) de la batterie $Bat_i$ et la tension du nœud commun N (courbe INV4) dans le premier scénario suivant l'invention. A la figure 20, la tension en ordonnée est exprimée en valeur réduite (u(pu)) correspondant à U / 20 kV.

On observe pour le premier scénario de la figure 20 que, bien que la tension de la batterie $Bat_i$ de la centrale C selon la courbe U3 soit idéalement tenue à sa valeur nominale $U_N$, cela n'est pas le cas pour les autres nœuds $N_{12}$, $N_{13}$, N du réseau aux courbes U1, U2 et U4. La tension de la courbe U1 du nœud N12 correspondant à la source respective $S_k$ de production d'électricité décentralisée de type photovoltaïque (PV) en est le parfait exemple avec une élévation de tension proche de 15% lors de la pointe de production de cette source PV. De façon moins impressionnante mais néanmoins remarquable, la tension de la courbe U2 au nœud $N_{13}$ correspondant au poste consommateur $PC_l$ d'électricité décentralisé chute de manière significative lors de la pointe de consommation entre 17 et 19 heures.

A la figure 21, le deuxième scénario suivant l'invention quant à lui permet, conformément à l'objectif de la présente invention, de minimiser les variations de tension sur l'ensemble du réseau en modulant la tension (courbe INV3) de la centrale C comportant la batterie $Bat_i$ (borne 10). La tension (courbe INV3) de la centrale C comportant la batterie $Bat_i$ (borne 10) est abaissée significativement pour limiter l'élévation de la tension (courbe INV1) au nœud $N_{12}$ à environ 8%, soit presque deux fois moins que la courbe U1 dans le premier scénario, lors de la pointe de production de la source respective $S_k$ de production d'électricité décentralisée de type photovoltaïque (PV) et, à l'inverse, la tension (courbe INV3) de la centrale C comportant la batterie $Bat_i$ (borne 10) est augmentée pour limiter la chute de tension au nœud $N_{13}$ lors de la pointe de consommation (courbe INV2 entre 17 et 19 heures) du poste consommateur $PC_l$ d'électricité décentralisé.

Bien entendu, les modes de réalisation, caractéristiques, possibilités et exemples décrits ci-dessus peuvent être combinés l'un avec l'autre ou être sélectionnés indépendamment l'un de l'autre.

## Revendications

**1.** Dispositif de contrôle d'une centrale (C ), laquelle comporte au moins une unité ($G_i$) de génération d'électricité et/ou au moins une unité ($Bat_i$) de stockage d'électricité, et au moins une borne (10) de connexion commune, qui est reliée à

l'unité ($G_i$) de génération d'électricité et/ou l'unité ($Bat_i$) de stockage d'électricité et qui est destinée à être connectée à au moins une ligne ($D_1$, $D_2$, $D_N$) d'un microréseau (MR) de consommation et/ou de production d'électricité,

le dispositif de contrôle comportant au moins un premier automate (100) de contrôle central ainsi qu'au moins un deuxième automate ($A_i$) de contrôle pour chaque unité ($G_i$) de génération d'électricité et/ou unité ($Bat_i$) de stockage d'électricité, le deuxième automate ($A_i$) de contrôle étant connecté au premier automate (100) de contrôle central, le premier automate (100) de contrôle central étant configuré pour calculer et transmettre au deuxième automate ($A_i$) de contrôle au moins une tension $U_{offset(i)}$ de décalage de chaque unité ($G_i$) de génération d'électricité et/ou de chaque unité ($Bat_i$) de stockage d'électricité, afin que la tension de la borne (10) de connexion commune soit réglée à une référence $U_{centraleRef}$ de tension,
**caractérisé en ce que** le premier automate (100) de contrôle central comporte
un deuxième organe (2) de mesure ou de détermination d'une tension $U_{Rmes}$ de la borne (10) de connexion commune,
un troisième organe (3) de calcul de la référence $U_{centraleRef}$ de tension de la borne (10) de connexion commune selon une première fonction prescrite f,
chaque deuxième automate ($A_i$) de contrôle comporte un quatrième organe ($4_i$) de mesure ou de détermination d'une première puissance réactive individuelle $Q_{mes(i)}$ fournie ou absorbée par l'unité ($G_i$) de génération d'électricité associée à ce deuxième automate ($A_i$) et/ou l'unité ($Bat_i$) de stockage d'électricité associée à ce deuxième automate ($A_i$) vers la borne (10) de connexion, le premier automate (100) de contrôle central comporte un premier correcteur (5) de tension, ayant une deuxième fonction de transfert prescrite corr,
le premier automate (100) de contrôle étant configuré pour calculer

$$U_{offset} = corr(U_{centraleRef} - U_{Rmes})$$

où $U_{offset}$ est une première tension de décalage centrale, calculée en appliquant la deuxième fonction de transfert prescrite corr du premier correcteur à la différence $U_{centraleRef} - U_{Rmes}$, le premier automate (100) de contrôle est configuré pour calculer la deuxième tension de décalage $U_{offset(i)}$ selon une troisième fonction prescrite ($g_i$) à partir de la première tension de décalage centrale $U_{offset}$ et pour transmettre la deuxième tension de décalage $U_{offset(i)}$ au deuxième automate ($A_i$) de contrôle pour l'unité ($G_i$) de génération d'électricité associée à ce deuxième automate ($A_i$) et/ou pour l'unité ($Bat_i$) de stockage d'électricité associée à ce deuxième automate ($A_i$),
le deuxième automate ($A_i$) de contrôle est configuré pour calculer au moins une tension $U_{ref(i)}$ de consigne locale pour l'unité ($G_i$) de génération d'électricité associée à ce deuxième automate ($A_i$) et/ou pour l'unité ($Bat_i$) de stockage d'électricité associée à ce deuxième automate ($A_i$), selon

$$U_{ref(i)} = U_{offset(i)} - K_{UQ(i)} \cdot Q_{mes(i)}$$

où $K_{UQ(i)}$ est un coefficient prescrit, non nul,
le premier automate (100) de contrôle comporte en outre au moins un cinquième organe (5) de réception pour recevoir :

- des premières valeurs ($U_{sources\text{-}décentralisées\text{-}k}$) de télémesure de tension respectivement de sources ($S_k$, $S_{k+1}$) de production d'électricité décentralisées du microréseau (MR) de consommation et/ou de production d'électricité, distantes d'au moins une distance non nulle ($N_{11}$, $N_{12}$) les unes par rapport aux autres et par rapport à la borne (10) de connexion commune de la centrale (C),
- des deuxièmes valeurs ($U_{postes\text{-}consommateurs\text{-}l}$) de télémesure de tension respectivement de postes consommateurs ($PC_l$, $PC_{l+1}$, $PC_{l+2}$) d'électricité décentralisés de la ligne ($D_1$, $D_2$,.., $D_N$) du microréseau (MR) de consommation et/ou de production d'électricité, distants d'au moins une distance non nulle ($N_{13}$, $N_{14}$, $N_{15}$) les uns par rapport aux autres et par rapport à la borne (10) de connexion commune de la centrale (C),

la première fonction prescrite f comporte :

- le calcul d'un maximum ($U_{Rmax}$) de tension entre la tension $U_{Rmes}$ de la borne (10) de connexion commune de la centrale (C) et les premières valeurs ($U_{sources\text{-}décentralisées\text{-}k}$) de télémesure de tension respectivement des sources ($S_k$, $S_{k+1}$) de production d'électricité décentralisées du microréseau (MR) de consommation et/ou de production d'électricité,
- le calcul d'un minimum ($U_{Rmin}$) de tension entre la tension $U_{Rmes}$ de la borne (10) de connexion commune de la centrale (C ) et les deuxièmes valeurs ($U_{postes-consommateurs-l}$) de télémesure de tension respectivement des postes consommateurs ($PC_l$, $PC_{l+1}$, $PC_{l+2}$) d'électricité décentralisés du microréseau (MR) de consommation et/ou de production d'électricité,
- la prise en compte de la demi-somme du maximum ($U_{Rmax}$) de tension et du minimum ($U_{Rmin}$) de tension pour le calcul de la référence $U_{centraleRef}$ de tension.

2. Dispositif suivant la revendication 1, **caractérisé en ce que** le troisième organe (3) de calcul comporte un deuxième correcteur (REG) du type proportionnel, intégrateur et dérivateur fournissant la référence $U_{centraleRef}$ de tension à partir de la différence entre d'une part une tension nominale prescrite ($U_N$) du microréseau et d'autre part la demi-somme du maximum ($U_{Rmax}$) de tension et du minimum ($U_{Rmin}$) de tension.

3. Dispositif l'une quelconque des revendications précédentes, **caractérisé en ce que** le premier automate (100) de contrôle central comporte un autre organe (4) de mesure ou de détermination d'une première puissance réactive totale $Q_{mes}$ sortant de la centrale (C ), fournie ou absorbée par l'unité ($G_i$) de génération d'électricité et/ou l'unité ($Bat_i$) de stockage d'électricité,

le premier automate (100) de contrôle comporte :

un sixième organe (6) de calcul de consignes respectives (Qsource-décentralisée-k , Qsource-décentralisée-k+1) de puissance réactive des sources respectives ($S_k$, $S_{k+1}$) de production d'électricité décentralisées du microréseau (MR) de consommation et/ou de production d'électricité, distantes d'au moins une distance non nulle ($N_{11}$, $N_{12}$) par rapport à la borne (10) de connexion commune, qui sont des proportions ($r_k$, $r_{k+1}$) au moins de la première puissance réactive totale $Q_{mes}$ sortant de la centrale (C ), fournie ou absorbée par l'unité ($G_i$) de génération d'électricité et/ou l'unité ($Bat_i$) de stockage d'électricité.

4. Dispositif suivant la revendication 3, **caractérisé en ce que** le premier automate (100) de contrôle comporte en outre au moins un septième organe (7) de réception pour recevoir :

- des troisièmes valeurs respectives ($Q_{mes-source-décentralisée-k}$, $Q_{mes-source-décentralisée-k+1}$) de télémesure de puissance réactive des sources respectives ($S_k$, $S_{k+1}$) de production d'électricité décentralisées du microréseau (MR) de consommation et/ou de production d'électricité,

le sixième organe (6) de calcul étant configuré pour calculer une deuxième puissance réactive totale ($Q_{microréseau}$) égale à la somme (SPR) de la première puissance réactive totale $Q_{mes}$ sortant de la centrale (C ), fournie ou absorbée par l'unité ($G_i$) de génération d'électricité et/ou l'unité ($Bat_i$) de stockage d'électricité et des troisièmes valeurs respectives ($Q_{mes-source-décentralisée-k}$, $Q_{mes}$-source-décentralisée-k+1) de télémesure de puissance réactive des sources respectives ($S_k$, $S_{k+1}$) de production d'électricité décentralisées du microréseau (MR) de consommation et/ou de production d'électricité et pour calculer les consignes respectives ($Q_{source-décentralisée-k}$ , $Q_{source-décentralisée-k+1}$) de puissance réactive des sources respectives ($S_k$, $S_{k+1}$) de production d'électricité décentralisées du microréseau (MR) de consommation et/ou de production d'électricité comme étant des proportions ($r_k$, $r_{k+1}$) de ladite somme ($Q_{microréseau}$, SPR).

5. Dispositif suivant la revendication 3 ou 4, **caractérisé en ce que** lesdites proportions ($r_k$, $r_{k+1}$) dans les consignes respectives ($Q_{source-décentralisée-k}$ , Qsource-décentralisée-k+1) de puissance réactive des sources respectives ($S_k$, $S_{k+1}$) de production d'électricité décentralisées du microréseau (MR) de consommation et/ou de production d'électricité correspondent à des ratios respectifs d'une capacité prescrite respective ($CPRS_k$, $CPRS_{k+1}$) en puissance réactive de la source respective ($S_k$, $S_{k+1}$) de production d'électricité décentralisée du microréseau (MR) de consommation et/ou de production d'électricité, divisée par une somme (SCPRS) des capacités prescrites respectives ($CPRS_k$, $CPRS_{k+1}$) en puissance réactive des sources respectives ($S_k$, $S_{k+1}$) de production d'électricité de la ligne ($D_1$, $D_2$,.., $D_N$) du microréseau (MR) de consommation et/ou de production d'électricité et des capacités prescrites respectives ($CPRS_i$) en puissance réactive de l'unité ($G_i$) de génération d'électricité et/ou de l'unité ($Bat_i$) de stockage d'électricité.

6. Dispositif suivant l'une quelconque des revendications précédentes, **caractérisé en ce que** la troisième fonction prescrite ($g_i$) comprend la division de la première tension de décalage centrale $U_{offset}$ par une tension nominale ($U_{in}$) prescrite de l'unité ($G_i$) de génération d'électricité et/ou de l'unité ($Bat_i$) de stockage d'électricité.

7. Dispositif suivant l'une quelconque des revendications 3 à 5, **caractérisé en ce que** le premier automate (100) de contrôle central comporte, comme autre organe (4), un autre organe (4) de détermination de la première puissance réactive totale $Q_{mes}$ sortant de la centrale (C ), fournie ou absorbée par l'unité ($G_i$) de génération d'électricité et/ou

l'unité (Bat$_i$) de stockage d'électricité, en faisant la somme des premières puissances réactives individuelles Q$_{mes(i)}$.

8. Dispositif suivant l'une quelconque des revendications 3 à 5, **caractérisé en ce que** le premier automate (100) de contrôle central comporte, comme autre organe (4), un autre organe (4) de mesure de la première puissance réactive totale Q$_{mes}$ sortant de la centrale (C ), fournie ou absorbée par l'unité (G$_i$) de génération d'électricité et/ou l'unité (Bat$_i$) de stockage d'électricité sur la borne (10) de connexion commune.

9. Procédé de contrôle d'une centrale (C ), laquelle comporte au moins une unité (G$_i$) de génération d'électricité et/ou au moins une unité (Bat$_i$) de stockage d'électricité, et au moins une borne (10) de connexion commune, qui est reliée à l'unité (G$_i$) de génération d'électricité et/ou l'unité (Bat$_i$) de stockage d'électricité et qui est destinée à être connectée à au moins une ligne (D$_1$, D$_2$, D$_N$) d'un microréseau (MR) de consommation et/ou de production d'électricité,

procédé dans lequel un automate (100) de contrôle central de l'unité (G$_i$) de génération d'électricité et/ou de l'unité (Bat$_i$) de stockage d'électricité calcule (E5) et transmet au moins une tension U$_{offset(i)}$ de décalage de chaque unité (G$_i$) de génération d'électricité et/ou de chaque unité (Bat$_i$) de stockage d'électricité à au moins un deuxième automate (A$_i$) de contrôle de chaque unité (G$_i$) de génération d'électricité et/ou unité (Bat$_i$) de stockage d'électricité, afin que la tension de la borne (10) de connexion commune soit réglée à une référence U$_{centraleRef}$ de tension,

**caractérisé en ce que**

on reçoit par un cinquième organe (5) de réception :

- des premières valeurs (U$_{sources-décentralisées-k}$) de télémesure de tension respectivement de sources (S$_k$, S$_{k+1}$) de production d'électricité décentralisées du microréseau (MR) de consommation et/ou de production d'électricité, distantes d'au moins une distance non nulle (N$_{11}$, N$_{12}$) les unes par rapport aux autres et par rapport à la borne (10) de connexion commune de la centrale (C ),
- des deuxièmes valeurs (U$_{postes-consommateurs-l}$) de télémesure de tension respectivement de postes consommateurs (PC$_l$, PC$_{l+1}$, PC$_{l+2}$) d'électricité décentralisés de la ligne (D$_1$, D$_2$,.., D$_N$) du microréseau (MR) de consommation et/ou de production d'électricité, distants d'au moins une distance non nulle (N$_{13}$, N$_{14}$, N$_{15}$) les uns par rapport aux autres et par rapport à la borne (10) de connexion commune de la centrale (C ),

on mesure (E2) par un deuxième organe (2) de mesure du premier automate (100) de contrôle central une tension U$_{Rmes}$ de la borne (10) de connexion commune,
on calcule (E3) par un troisième organe (3) de calcul du premier automate (100) de contrôle central une référence U$_{centraleRef}$ de tension de la borne (10) de connexion commune selon une première fonction prescrite f,
la première fonction prescrite f comportant :

- le calcul d'un maximum (U$_{Rmax}$) de tension entre la tension U$_{Rmes}$ de la borne (10) de connexion commune de la centrale (C ) et les premières valeurs (U$_{sources-décentralisées-k}$) de télémesure de tension respectivement des sources (S$_k$, S$_{k+1}$) de production d'électricité décentralisées du microréseau (MR) de consommation et/ou de production d'électricité,
- le calcul d'un minimum (U$_{Rmin}$) de tension entre la tension U$_{Rmes}$ de la borne (10) de connexion commune de la centrale (C ) et les deuxièmes valeurs (U$_{postes-consommateurs-l}$) de télémesure de tension respectivement des postes consommateurs (PC$_l$, PC$_{l+1}$, PC$_{l+2}$) d'électricité décentralisés du microréseau (MR) de consommation et/ou de production d'électricité,
- la prise en compte de la demi-somme du maximum (U$_{Rmax}$) de tension et du minimum (U$_{Rmin}$) de tension pour le calcul de la référence U$_{centraleRef}$ de tension,

on mesure ou détermine (E4) par un quatrième organe (4$_i$) de mesure ou de détermination du deuxième automate (A$_i$) de contrôle une première puissance réactive individuelle Q$_{mes(i)}$ fournie ou absorbée par l'unité (G$_i$) de génération d'électricité associée à ce deuxième automate (A$_i$) et/ou par l'unité (Bat$_i$) de stockage d'électricité associée à ce deuxième automate (A$_i$) vers la borne (10) de connexion,
le premier automate (100) de contrôle central ayant un premier correcteur (5) de tension, ayant une deuxième fonction de transfert prescrite corr,
on calcule (E5) par le premier automate (100) de contrôle central

$$U_{offset} = corr\,(U_{centraleRef} - U_{Rmes})$$

où $U_{offset}$ est une première tension de décalage centrale, calculée en appliquant la deuxième fonction de transfert prescrite corr du premier correcteur à la différence $U_{centraleRef}$ - $U_{Rmes}$,

on calcule (E6) par le premier automate (100) de contrôle la deuxième tension de décalage $U_{offset(i)}$ à partir de la première tension de décalage centrale $U_{offset}$ selon une troisième fonction prescrite $(g_i)$ et on transmet par le premier automate (100) de contrôle la deuxième tension de décalage $U_{offset(i)}$ au deuxième automate $(A_i)$ de contrôle pour l'unité $(G_i)$ de génération d'électricité associée à ce deuxième automate $(A_i)$ et/ou pour l'unité $(Bat_i)$ de stockage d'électricité associée à ce deuxième automate $(A_i)$,

on calcule (E7) par le deuxième automate $(A_i)$ de contrôle au moins une tension $U_{ref(i)}$ de consigne locale pour l'unité $(G_i)$ de génération d'électricité associée à ce deuxième automate $(A_i)$ et/ou pour l'unité $(Bat_i)$ de stockage d'électricité associée à ce deuxième automate $(A_i)$, selon

$$U_{ref(i)} = U_{offset(i)} - K_{UQ(i)} . Q_{mes(i)}$$

où $K_{UQ(i)}$ est un coefficient prescrit, non nul.

10. Programme d'ordinateur comportant des instructions de code pour la mise en œuvre d'un procédé de contrôle d'une centrale (C ), laquelle comporte au moins une unité $(G_i)$ de génération d'électricité et/ou au moins une unité $(Bat_i)$ de stockage d'électricité, et au moins une borne (10) de connexion commune, qui est reliée à l'unité $(G_i)$ de génération d'électricité et/ou l'unité $(Bat_i)$ de stockage d'électricité et qui est destinée à être connectée à au moins une ligne $(D_1, D_2, D_N)$ d'un microréseau (MR) de consommation et/ou de production d'électricité,

procédé dans lequel un automate (100) de contrôle central de l'unité $(G_i)$ de génération d'électricité et/ou de l'unité $(Bat_i)$ de stockage d'électricité calcule (E5) et transmet au moins une tension $U_{offset(i)}$ de décalage de chaque unité $(G_i)$ de génération d'électricité et/ou de chaque unité $(Bat_i)$ de stockage d'électricité à au moins un deuxième automate $(A_i)$ de contrôle de chaque unité $(G_i)$ de génération d'électricité et/ou unité $(Bat_i)$ de stockage d'électricité, afin que la tension de la borne (10) de connexion commune soit réglée à une référence $U_{centraleRef}$ de tension,

**caractérisé en ce que**

on reçoit par un cinquième organe (5) de réception :

- des premières valeurs $(U_{sources-décentralisées-k})$ de télémesure de tension respectivement de sources $(S_k, S_{k+1})$ de production d'électricité décentralisées du microréseau (MR) de consommation et/ou de production d'électricité, distantes d'au moins une distance non nulle $(N_{11}, N_{12})$ les unes par rapport aux autres et par rapport à la borne (10) de connexion commune de la centrale (C ),
- des deuxièmes valeurs $(U_{postes-consommateurs-l})$ de télémesure de tension respectivement de postes consommateurs $(PC_l, PC_{l+1}, PC_{l+2})$ d'électricité décentralisés de la ligne $(D_1, D_2,.., D_N)$ du microréseau (MR) de consommation et/ou de production d'électricité, distants d'au moins une distance non nulle $(N_{13}, N_{14}, N_{15})$ les uns par rapport aux autres et par rapport à la borne (10) de connexion commune de la centrale (C ),

on mesure (E2) par un deuxième organe (2) de mesure du premier automate (100) de contrôle central une tension $U_{Rmes}$ de la borne (10) de connexion commune,

on calcule (E3) par un troisième organe (3) de calcul du premier automate (100) de contrôle central une référence $U_{centraleRef}$ de tension de la borne (10) de connexion commune selon une première fonction prescrite f dépendant au moins de la puissance active totale $P_{centrale}$,

la première fonction prescrite f comportant :

- le calcul d'un maximum $(U_{Rmax})$ de tension entre la tension $U_{Rmes}$ de la borne (10) de connexion commune de la centrale (C ) et les premières valeurs $(U_{sources-décentralisées-k})$ de télémesure de tension respectivement des sources $(S_k, S_{k+1})$ de production d'électricité décentralisées du microréseau (MR) de consommation et/ou de production d'électricité,
- le calcul d'un minimum $(U_{Rmin})$ de tension entre la tension $U_{Rmes}$ de la borne (10) de connexion commune de la centrale (C ) et les deuxièmes valeurs $(U_{postes-consommateurs-l})$ de télémesure de tension respectivement des postes consommateurs $(PC_l, PC_{l+1}, PC_{l+2})$ d'électricité décentralisés du microréseau (MR) de consommation et/ou de production d'électricité,
- la prise en compte de la demi-somme du maximum $(U_{Rmax})$ de tension et du minimum $(U_{Rmin})$ de tension pour le calcul de la référence $U_{centraleRef}$ de tension,

on mesure ou détermine (E4) par un quatrième organe ($4_i$) de mesure ou de détermination du deuxième automate ($A_i$) de contrôle une première puissance réactive individuelle $Q_{mes(i)}$ fournie ou absorbée par l'unité ($G_i$) de génération d'électricité associée à ce deuxième automate ($A_i$) et/ou par l'unité ($Bat_i$) de stockage d'électricité associée à ce deuxième automate ($A_i$) vers la borne (10) de connexion,

le premier automate (100) de contrôle central ayant un premier correcteur (5) de tension, ayant une deuxième fonction de transfert prescrite corr,

on calcule (E5) par le premier automate (100) de contrôle central

$$U_{offset} = corr(U_{centraleRef} - U_{Rmes})$$

où $U_{offset}$ est une première tension de décalage centrale, calculée en appliquant la deuxième fonction de transfert prescrite corr du premier correcteur à la différence $U_{centrateRef} - U_{Rmes}$,

on calcule (E6) par le premier automate (100) de contrôle la deuxième tension de décalage $U_{offset(i)}$ à partir de la première tension de décalage centrale $U_{offset}$ selon une troisième fonction prescrite ($g_i$) et on transmet par le premier automate (100) de contrôle la deuxième tension de décalage $U_{offset(i)}$ au deuxième automate ($A_i$) de contrôle pour l'unité ($G_i$) de génération d'électricité associée à ce deuxième automate ($A_i$) et/ou pour l'unité ($Bat_i$) de stockage d'électricité associée à ce deuxième automate ($A_i$),

on calcule (E7) par le deuxième automate ($A_i$) de contrôle au moins une tension $U_{ref(i)}$ de consigne locale pour l'unité ($G_i$) de génération d'électricité associée à ce deuxième automate ($A_i$) et/ou pour l'unité ($Bat_i$) de stockage d'électricité associée à ce deuxième automate ($A_i$), selon

$$U_{ref(i)} = U_{offset(i)} - K_{UQ(i)}.Q_{mes(i)}$$

où $K_{UQ(i)}$ est un coefficient prescrit, non nul,

le programme d'ordinateur étant exécuté par le premier automate (100) de contrôle central et par le deuxième automate ($A_i$) de contrôle.

## Patentansprüche

1. Vorrichtung zur Steuerung eines Kraftwerks (C), das mindestens eine Stromerzeugungseinheit ($G_i$) und/oder mindestens eine Stromspeichereinheit ($Bat_i$) und mindestens einen gemeinsamen Verbindungsanschluss (10) umfasst, der mit der Stromerzeugungseinheit ($G_i$) und/oder der Stromspeichereinheit ($Bat_i$) verbunden ist und der dazu bestimmt ist, mit mindestens einer Leitung ($D_1$, $D_2$, $D_N$) eines Mikronetzes (MR) zum Verbrauch und/oder zur Erzeugung von Strom verbunden zu sein,

wobei die Steuervorrichtung mindestens einen ersten zentralen Steuerautomaten (100) sowie mindestens einen zweiten Steuerautomaten ($A_i$) für jede Stromerzeugungseinheit ($G_i$) und/oder Stromspeichereinheit ($Bat_i$) umfasst, wobei der zweite Steuerautomat ($A_i$) mit dem ersten zentralen Steuerautomaten (100) verbunden ist, wobei der erste zentrale Steuerautomat (100) ausgelegt ist, um mindestens eine Offsetspannung $U_{offset(i)}$ jeder Stromerzeugungseinheit ($G_i$) und/oder jeder Stromspeichereinheit ($Bat_i$) zu berechnen und an den zweiten Steuerautomaten ($A_i$) zu übertragen, damit die Spannung des gemeinsamen Verbindungsanschlusses (10) auf eine Spannungsreferenz $U_{centraleRef}$ eingestellt wird,

**dadurch gekennzeichnet, dass** der erste zentrale Steuerautomat (100) aufweist

ein zweites Element (2) zum Messen oder Bestimmen einer Spannung $U_{Rmes}$ des gemeinsamen Verbindungsanschlusses (10),

ein drittes Element (3) zur Berechnung der Spannungsreferenz $U_{centraleRef}$ des gemeinsamen Verbindungsanschlusses (10) gemäß einer ersten vorgeschriebenen Funktion f,

wobei jeder zweite Steuerautomat ($A_i$) ein viertes Element ($4_i$) zur Messung oder Bestimmung einer ersten individuellen Blindleistung $Q_{mes(i)}$ aufweist, die von der diesem zweiten Automaten ($A_i$) zugeordneten Stromerzeugungseinheit ($G_i$) und/oder der diesem zweiten Automaten ($A_i$) zugeordneten Stromspeichereinheit ($Bat_i$) an den Verbindungsanschluss (10) geliefert oder aufgenommen wird,

wobei der erste zentrale Steuerautomat (100) einen ersten Spannungskorrektor (5) aufweist, der eine zweite vorgeschriebene Übertragungsfunktion corr hat

wobei der erste Steuerautomat (100) ausgelegt ist, um zu berechnen

$$U_{offset} = corr(U_{centraleRef} - U_{Rmes})$$

wobei $U_{offset}$ eine erste zentrale Offsetspannung ist, die durch Anwenden der zweiten vorgeschriebenen Übertragungsfunktion corr des ersten Korrektors auf die Differenz $U_{centraleRef}$ - $U_{Rmes}$ berechnet wird, wobei der erste Steuerautomat (100) ausgelegt ist, um die zweite Offsetspannung $U_{offset(i)}$ gemäß einer dritten vorgeschriebenen Funktion ($g_i$) aus der ersten zentralen Offsetspannung $U_{offset}$ zu berechnen und um die zweite Offsetspannung $U_{offset(i)}$ an den zweiten Steuerautomaten ($A_i$) für die diesem zweiten Automaten ($A_i$) zugeordnete Stromerzeugungseinheit ($G_i$) und/oder für die diesem zweiten Automaten ($A_i$) zugeordnete Stromspeichereinheit ($Bat_i$) zu übertragen,

der zweite Steuerautomat ($A_i$) ausgelegt ist, um mindestens eine lokale Sollwertspannung $U_{ref(i)}$ für die diesem zweiten Automaten ($A_i$) zugeordnete Stromerzeugungseinheit ($G_i$) und/oder für die diesem zweiten Automaten ($A_i$) zugeordnete Stromspeichereinheit ($Bat_i$) zu berechnen, gemäß

$$U_{ref(i)} \ = \ U_{offset(i)} \ - \ K_{UQ(i)} . \ Q_{mes(i)}$$

wobei $K_{UQ(i)}$ ein vorgeschriebener Koeffizient ungleich Null ist,
der erste Steuerautomat (100) ferner mindestens ein fünftes Empfangselement (5) umfasst, um zu empfangen :

- erste Spannungsfernmesswerte ($U_{sources-décentralisées-k}$) von jeweils dezentralen Stromerzeugungsquellen ($S_k$, $S_{k+1}$) des Mikronetzes (MR) zum Verbrauch und/oder zur Erzeugung von Strom, die in mindestens einem Abstand ungleich Null ($N_{11}$, $N_{12}$) voneinander und vom gemeinsamen Verbindungsanschluss (10) des Kraftwerks (C) entfernt sind,
- zweite Spannungsfernmesswerte ($U_{postes-consomateurs-1}$) von jeweils dezentralen Stromverbraucherstationen ($PC_l$, $PC_{l+1}$, $PC_{l+2}$) der Leitung ($D_1$, $D_2$, ..., $D_N$) des Mikronetzes (MR) zum Verbrauch und/oder zur Erzeugung von Strom, die in mindestens einem Abstand von ungleich Null ($N_{13}$, $N_{14}$, $N_{15}$) voneinander und vom gemeinsamen Verbindungsanschluss (10) des Kraftwerks (C) entfernt sind,

die erste vorgeschriebene Funktion f aufweist:

- die Berechnung eines Spannungsmaximums ($U_{Rmax}$) zwischen der Spannung $U_{Rmes}$ des gemeinsamen Verbindungsanschlusses (10) des Kraftwerks (C) und den ersten Spannungsfernmesswerten ($U_{sources-décentralisées-k}$) jeweils der dezentralen Stromerzeugungsquellen ($S_k$, $S_{k+1}$) des Mikronetzes (MR) zum Verbrauch und/oder zur Erzeugung von Strom,
- die Berechnung eines Spannungsminimums ($U_{Rmin}$) zwischen der Spannung $U_{Rmes}$ des gemeinsamen Verbindungsanschlusses (10) des Kraftwerks (C) und den zweiten Spannungsfernmesswerten ($U_{postes-corisomateurs-l}$) jeweils der dezentralen Stromverbraucherstationen ($PC_l$, $PC_{l+1}$, $PC_{l+2}$) des Mikronetzes (MR) zum Verbrauch und/oder zur Erzeugung von Strom,
- die Berücksichtigung der halben Summe aus dem Spannungsmaximum ($U_{Rmax}$) und dem Spannungsminimum ($U_{Rmin}$) bei der Berechnung der Spannungsreferenz $U_{centraleRef}$.

2. Vorrichtung nach Anspruch 1, **dadurch gekennzeichnet, dass** das dritte Berechnungselement (3) einen zweiten Korrektor (REG) vom Proportional-, Integrations- und Ableitungstyp umfasst, der die Spannungsreferenz $U_{centraleRef}$ aus der Differenz zwischen einerseits einer vorgeschriebenen Nennspannung ($U_N$) des Mikronetzes und andererseits der halben Summe aus dem Spannungsmaximum ($U_{Rmax}$) und dem Spannungsminimum ($U_{Rmin}$) bereitstellt.

3. Vorrichtung nach einem beliebigen der vorhergehenden Ansprüche, **dadurch gekennzeichnet, dass** der erste zentrale Steuerautomat (100) ein weiteres Element (4) zur Messung oder Bestimmung einer ersten Gesamtblindleistung $Q_{mes}$ aufweist, die aus dem Kraftwerk (C) austritt, die von der Stromerzeugungseinheit ($G_i$) und/oder der Stromspeichereinheit ($Bat_i$) geliefert oder aufgenommen wird,
der erste Steuerautomat (100) aufweist:
ein sechstes Element (6) zur Berechnung jeweiliger Blindleistungssollwerte ($Q_{sources-décentralisées-k}$, $Q_{sources-décentralisées-k+1}$) der jeweiligen dezentralen Stromerzeugungsquellen ($S_k$, $S_{k+1}$) des Mikronetzes (MR) zum Verbrauch und/oder zur Erzeugung von Strom, die in mindestens einem Abstand ungleich Null ($N_{11}$, $N_{12}$) vom gemeinsamen Verbindungsanschluss (10) entfernt sind, wobei die jeweilige Blindleistungssollwerte ($Q_{sources-décentralisées-k}$, $Q_{sources-décentralisées-k+1}$) Anteile ($r_k$, $r_{k+1}$) mindestens der ersten Gesamtblindleistung $Q_{mes}$ sind, die aus dem Kraftwerk (C) austritt, die von der Stromerzeugungseinheit ($G_i$) und/oder der Stromspeichereinheit ($Bat_i$) geliefert oder aufgenommen wird.

4. Vorrichtung nach Anspruch 3, **dadurch gekennzeichnet, dass** der erste Steuerautomat (100) ferner mindestens ein siebtes Empfangselement (7) aufweist, um zu empfangen:

- jeweilige dritte Blindleistungsfernmesswerte ($Q_{mes-source-décentralisée-k}$, $Q_{mes-source-décentralisée-k+1}$) der jeweiligen dezentralen Stromerzeugungsquellen ($S_k$, $S_{k+1}$) des Mikronetzes (MR) zum Verbrauch und/oder zur Erzeugung von Strom,

wobei das sechste Berechnungselement (6) ausgelegt ist, um eine zweite Gesamtblindleistung ($Q_{microréseau}$) zu berechnen, die gleich der Summe (SPR) aus der ersten Gesamtblindleistung $Q_{mes}$ ist, die aus dem Kraftwerk (C) austritt und die von der Stromerzeugungseinheit ($G_i$) und/oder der Stromspeichereinheit ($Bat_i$) geliefert oder aufgenommen wird, und der jeweiligen dritten Blindleistungsfernmesswerte ($Q_{mes-source-décentralisée-k}$, $Q_{mes-source-décentralisée-k+1}$) der jeweiligen dezentralen Stromerzeugungsquellen ($S_k$, $S_{k+1}$) des Mikronetzes (MR) zum Verbrauch und/oder zur Erzeugung von Strom und um die jeweiligen Blindleistungssollwerte ($Q_{source-décentralisée-k}$, $Q_{source-décentralisée-k+1}$) der jeweiligen dezentralen Stromerzeugungsquellen ($S_k$, $S_{k+1}$) des Mikronetzes (MR) zum Verbrauch und/oder zur Erzeugung von Strom als Anteile ($r_k$, $r_{k+1}$) der Summe ($Q_{microréseau}$, SPR) zu berechnen.

5. Vorrichtung nach Anspruch 3 oder 4, **dadurch gekennzeichnet, dass** die Anteile ($r_k$, $r_{k+1}$) in den jeweiligen Blindleistungssollwerten ($Q_{source-décentralisée-k}$, $O_{source-décentralisée-k+1}$) der jeweiligen dezentralen Stromerzeugungsquellen ($S_k$, $S_{k+1}$) des Mikronetzes (MR) zum Verbrauch und/oder zur Erzeugung von Strom den jeweiligen Verhältnissen einer jeweiligen vorgeschriebenen Blindleistungskapazität ($CPRS_k$, $CPRS_{k+1}$) der jeweiligen dezentralen Stromerzeugungsquelle ($S_k$, $S_{k+1}$) des Mikronetzes (MR) zum Verbrauch und/oder zur Erzeugung von Strom, dividiert durch eine Summe (SCPRS) aus der jeweiligen vorgeschriebenen Blindleistungskapazitäten ($CPRS_k$, $CPRS_{k+1}$) der jeweiligen Stromerzeugungsquellen ($S_k$, $S_{k+1}$) der Leitung ($D_1$, $D_2$,..., $D_N$) des Mikronetzes (MR) zum Verbrauch und/oder zur Erzeugung von Strom und der jeweiligen vorgeschriebenen Blindleistungskapazitäten ($CPRS_i$) der Stromerzeugungseinheit ($G_i$) und/oder der Stromspeichereinheit ($Bat_i$) entsprechen.

6. Vorrichtung nach einem beliebigen der vorhergehenden Ansprüche, **dadurch gekennzeichnet, dass** die dritte vorgeschriebene Funktion ($g_i$) die Division der ersten zentralen Offsetspannung $U_{offset}$ durch eine vorgeschriebene Nennspannung ($U_{iN}$) der Stromerzeugungseinheit ($G_i$) und/oder der Stromspeichereinheit ($Bat_i$) umfasst.

7. Vorrichtung nach einem beliebigen der Ansprüche 3 bis 5, **dadurch gekennzeichnet, dass** der erste zentrale Steuerautomat (100) als weiteres Element (4) ein weiteres Element (4) zur Bestimmung der ersten Gesamtblindleistung $Q_{mes}$ aufweist, die aus dem Kraftwerk (C) austritt und die von der Stromerzeugungseinheit ($G_i$) und/oder der Stromspeichereinheit ($Bat_i$) geliefert oder aufgenommen wird, indem die Summe der ersten Einzelblindleistungen $Q_{mes(i)}$ gebildet wird.

8. Vorrichtung nach einem beliebigen der Ansprüche 3 bis 5, **dadurch gekennzeichnet, dass** der erste zentrale Steuerautomat (100) als weiteres Element (4) ein weiteres Element (4) zur Messung der ersten Gesamtblindleistung $Q_{mes}$ aufweist, die aus dem Kraftwerk (C) austritt und die von der Stromerzeugungseinheit ($G_i$) und/oder der Stromspeichereinheit ($Bat_i$) über den gemeinsamen Verbindungsanschluss (10) geliefert oder aufgenommen wird.

9. Verfahren zur Steuerung eines Kraftwerks (C), das mindestens eine Stromerzeugungseinheit ($G_i$) und/oder mindestens eine Stromspeichereinheit ($Bat_i$) und mindestens einen gemeinsamen Verbindungsanschluss (10) umfasst, der mit der Stromerzeugungseinheit ($G_i$) und/oder der Stromspeichereinheit ($Bat_i$) verbunden ist und der dazu bestimmt ist, mit mindestens einer Leitung ($D_1$, $D_2$, $D_N$) eines Mikronetzes (MR) zum Verbrauch und/oder zur Erzeugung von Strom verbunden zu sein,

wobei bei dem Verfahren ein zentraler Steuerautomat (100) der Stromerzeugungseinheit ($G_i$) und/oder der Stromspeichereinheit ($Bat_i$) mindestens eine Offsetspannung $U_{offset(i)}$ jeder Stromerzeugungseinheit ($G_i$) und/oder jeder Stromspeichereinheit ($Bat_i$) berechnet (E5) und an mindestens einen zweiten Steuerautomaten ($A_i$) jeder Stromerzeugungseinheit ($G_i$) und/oder Stromspeichereinheit ($Bat_i$) überträgt, damit die Spannung des gemeinsamen Verbindungsanschlusses (10) auf eine Spannungsreferenz $U_{centraleRef}$ eingestellt wird,
**dadurch gekennzeichnet, dass**
durch ein fünftes Empfangselement (5) empfangen werden:

- erste Spannungsfernmesswerte ($U_{source-décentralisée-k}$) von jeweils dezentralen Stromerzeugungsquellen ($S_k$, $S_{k+1}$) des Mikronetzes (MR) zum Verbrauch und/oder zur Erzeugung von Strom, die in mindestens einem Abstand ungleich Null ($N_{11}$, $N_{12}$) voneinander und vom gemeinsamen Verbindungsanschluss (10) des Kraftwerks (C) entfernt sind,

- zweite Spannungsfernmesswerte ($U_{postes-consomateurs-1}$) von jeweils dezentralen Stromverbraucherstationen ($PC_l$, $PC_{l+1}$, $PC_{l+2}$) der Leitung ($D_1$, $D_2$, ..., $D_N$) des Mikronetzes (MR) zum Verbrauch und/oder zur Erzeugung von Strom, die in mindestens einem Abstand ungleich Null ($N_{13}$, $N_{14}$, $N_{15}$) voneinander und vom gemeinsamen Verbindungsanschluss (10) des Kraftwerks (C) entfernt sind,

durch ein zweites Messelement (2) des ersten zentralen Steuerautomaten (100) eine Spannung $U_{Rmes}$ des gemeinsamen Verbindungsanschlusses (10) gemessen (E2) wird,
durch ein drittes Berechnungselement (3) des ersten zentralen Steuerautomaten (100) eine Spannungsreferenz $U_{centraleRef}$ des gemeinsamen Verbindungsanschlusses (10) gemäß einer ersten vorgeschriebenen Funktion f berechnet (E3) wird,
wobei die erste vorgeschriebene Funktion f aufweist:

- die Berechnung eines Spannungsmaximums ($U_{Rmax}$) zwischen der Spannung $U_{Rmes}$ des gemeinsamen Verbindungsanschlusses (10) des Kraftwerks (C) und den ersten Spannungsfernmesswerten ($U_{sources-décentralisées-k}$) jeweils der dezentralen Stromerzeugungsquellen ($S_k$, $S_{k+1}$) des Mikronetzes (MR) zum Verbrauch und/oder zur Erzeugung von Strom,
- die Berechnung eines Spannungsminimums ($U_{Rmin}$) zwischen der Spannung $U_{Rmes}$ des gemeinsamen Verbindungsanschlusses (10) des Kraftwerks (C) und den zweiten Spannungsfernmesswerten ($U_{postes-consomateurs-l}$) jeweils der dezentralen Stromverbraucherstationen ($PC_l$, $PC_{l+1}$, $PC_{l+2}$) des Mikronetzes (MR) zum Verbrauch und/oder zur Erzeugung von Strom,
- die Berücksichtigung der halben Summe aus dem Spannungsmaximum ($U_{Rmax}$) und dem Spannungsminimum ($U_{Rmin}$) bei der Berechnung der Spannungsreferenz $U_{centraleRef}$,

durch ein viertes Element ($4_i$) zur Messung oder Bestimmung des zweiten Steuerautomaten ($A_i$) eine erste Einzelblindleistung $Q_{mes(i)}$ gemessen oder bestimmt (E4) wird, die von der diesem zweiten Automaten ($A_i$) zugeordneten Stromerzeugungseinheit ($G_i$) und/oder der diesem zweiten Automaten ($A_i$) zugeordneten Stromspeichereinheit ($Bat_i$) an den Verbindungsanschluss (10) geliefert oder aufgenommen wird,
wobei der erste zentrale Steuerautomat (100) einen ersten Spannungskorrektor (5) aufweist, der eine zweite vorgeschriebene Übertragungsfunktion corr hat,
durch den ersten zentralen Steuerautomaten (100) berechnet (E5) wird

$$U_{offset} = corr(U_{centraleRef} - U_{Rmes})$$

wobei $U_{offset}$ eine erste zentrale Offsetspannung ist, die durch Anwenden der zweiten vorgeschriebenen Übertragungsfunktion corr des ersten Korrektors auf die Differenz $U_{centraleRef} - U_{(Rmes)}$ berechnet wird,
durch den ersten Steuerautomaten (100) die zweite Offsetspannung $U_{offset(i)}$ aus der ersten zentralen Offsetspannung $U_{offset}$ gemäß einer dritten vorgeschriebenen Funktion ($g_i$) berechnet wird (E6) und durch den ersten Steuerautomaten (100) die zweite Offsetspannung $U_{offset(i)}$ an den zweiten Steuerautomaten ($A_i$) für die diesem zweiten Automaten ($A_i$) zugeordnete Stromerzeugungseinheit ($G_i$) und/oder für die diesem zweiten Automaten ($A_i$) zugeordnete Stromspeichereinheit ($Bat_i$) übertragen wird,
durch den zweiten Steuerautomaten ($A_i$) mindestens eine lokale Sollwertspannung $U_{ref(i)}$ für die diesem zweiten Steuerautomaten ($A_i$) zugeordnete Stromerzeugungseinheit ($G_i$) und/oder für die diesem zweiten Steuerautomaten ($A_i$) zugeordnete Stromspeichereinheit ($Bat_i$) berechnet (E7) wird, gemäß

$$U_{ref(i)} = U_{offset(i)} - K_{UQ(i)} \cdot Q_{mes(i)}$$

wobei $K_{UQ(i)}$ ein vorgeschriebener Koeffizient ungleich Null ist.

**10.** Rechnerprogramm, das Codeanweisungen zur Durchführung eines Verfahrens zur Steuerung eines Kraftwerks (C) aufweist, das mindestens eine Stromerzeugungseinheit ($G_i$) und/oder mindestens eine Stromspeichereinheit ($Bat_i$) und mindestens einen gemeinsamen Verbindungsanschluss (10) umfasst, der mit der Stromerzeugungseinheit ($G_i$) und/oder der Stromspeichereinheit ($Bat_i$) verbunden ist und der dazu bestimmt ist, mit mindestens einer Leitung ($D_1$, $D_2$, $D_N$) eines Mikronetzes (MR) zum Verbrauch und/oder zur Erzeugung von Strom verbunden zu sein,

wobei bei dem Verfahren ein zentraler Steuerautomat (100) der Stromerzeugungseinheit ($G_i$) und/oder der Stromspeichereinheit ($Bat_i$) mindestens eine Offsetspannung $U_{offset(i)}$ jeder Stromerzeugungseinheit ($G_i$) und/oder jeder Stromspeichereinheit ($Bat_i$) berechnet (E5) und an mindestens einen zweiten Steuerautomaten ($A_i$)

jeder Stromerzeugungseinheit ($G_i$) und/oder Stromspeichereinheit ($Bat_i$) überträgt, damit die Spannung des gemeinsamen Verbindungsanschlusses (10) auf eine Spannungsreferenz $U_{centraleRef}$ eingestellt wird,

**dadurch gekennzeichnet, dass**

durch ein fünftes Empfangselement (5) empfangen werden:

- erste Spannungsfernmesswerte ($U_{source-décentralisée-k}$) von jeweils dezentralen Stromerzeugungsquellen ($S_k$, $S_{k+1}$) des Mikronetzes (MR) zum Verbrauch und/oder zur Erzeugung von Strom, die in mindestens einem Abstand ungleich Null ($N_{11}$, $N_{12}$) voneinander und vom gemeinsamen Verbindungsanschluss (10) des Kraftwerks (C) entfernt sind,
- zweite Spannungsfernmesswerte ($U_{postes-consomateurs-1}$) von jeweils dezentralen Stromverbraucherstationen ($PC_l$, $PC_{l+1}$, $PC_{l+2}$) der Leitung ($D_1$, $D_2$,..., $D_N$) des Mikronetzes (MR) zum Verbrauch und/oder zur Erzeugung von Strom, die in mindestens einem Abstand ungleich Null ($N_{13}$, $N_{14}$, $N_{15}$) voneinander und vom gemeinsamen Verbindungsanschluss (10) des Kraftwerks (C) entfernt sind,

durch ein zweites Messelement (2) des ersten zentralen Steuerautomaten (100) eine Spannung $U_{Rmes}$ des gemeinsamen Verbindungsanschlusses (10) gemessen (E2) wird,

durch ein drittes Berechnungselement (3) des ersten zentralen Steuerautomaten (100) eine Spannungsreferenz $U_{centraleRef}$ des gemeinsamen Verbindungsanschlusses (10) gemäß einer ersten vorgeschriebenen Funktion f berechnet (E3) wird,

wobei die erste vorgeschriebene Funktion f aufweist:

- die Berechnung eines Spannungsmaximums ($U_{Rmax}$) zwischen der Spannung $U_{Rmes}$ des gemeinsamen Verbindungsanschlusses (10) des Kraftwerks (C) und den ersten Spannungsfernmesswerten ($U_{source-décentralisée-k}$) jeweils der dezentralen Stromerzeugungsquellen ($S_k$, $S_{k+1}$) des Mikronetzes (MR) zum Verbrauch und/oder zur Erzeugung von Strom,
- die Berechnung eines Spannungsminimums ($U_{Rmin}$) zwischen der Spannung $U_{Rmes}$ des gemeinsamen Verbindungsanschlusses (10) des Kraftwerks (C) und den zweiten Spannungsfernmesswerten ($U_{postes-consomateurs-l}$) jeweils der dezentralen Stromverbraucherstationen ($PC_l$, $PC_{l+1}$, $PC_{l+2}$) des Mikronetzes (MR) zum Verbrauch und/oder zur Erzeugung von Strom,
- die Berücksichtigung der halben Summe aus dem Spannungsmaximum ($U_{Rmax}$) und dem Spannungsminimum ($U_{Rmin}$) bei der Berechnung der Spannungsreferenz $U_{centraleRef}$,

durch ein viertes Element ($4_i$) zur Messung oder Bestimmung des zweiten Steuerautomaten ($A_i$) eine erste Einzelblindleistung $Q_{mes(i)}$ gemessen oder bestimmt (E4) wird, die von der diesem zweiten Automaten ($A_i$) zugeordneten Stromerzeugungseinheit ($G_i$) und/oder der diesem zweiten Automaten ($A_i$) zugeordneten Stromspeichereinheit ($Bat_i$) an den Verbindungsanschluss (10) geliefert oder aufgenommen wird,

wobei der erste zentrale Steuerautomat (100) einen ersten Spannungskorrektor (5) aufweist, der eine zweite vorgeschriebene Übertragungsfunktion corr hat,

durch den ersten zentralen Steuerautomaten (100) berechnet (E5) wird

$$U_{offset} = \mathrm{corr}(U_{centraleRef} - U_{Rmes})$$

wobei $U_{offset}$ eine erste zentrale Offsetspannung ist, die durch Anwenden der zweiten vorgeschriebenen Übertragungsfunktion corr des ersten Korrektors auf die Differenz $U_{centraleRef}$ - $U_{Rmes}$ berechnet wird,

durch den ersten Steuerautomaten (100) die zweite Offsetspannung $U_{offset(i)}$ aus der ersten zentralen Offsetspannung $U_{offset}$ gemäß einer dritten vorgeschriebenen Funktion ($g_i$) berechnet (E6) wird und durch den ersten Steuerautomaten (100) die zweite Offsetspannung $U_{offset(i)}$ an den zweiten Steuerautomaten ($A_i$) für die diesem zweiten Automaten ($A_i$) zugeordnete Stromerzeugungseinheit ($G_i$) und/oder für die diesem zweiten Automaten ($A_i$) zugeordnete Stromspeichereinheit ($Bat_i$) übertragen wird,

durch den zweiten Steuerautomaten ($A_i$) mindestens eine lokale Sollwertspannung $U_{ref(i)}$ für die diesem zweiten Steuerautomaten ($A_i$) zugeordnete Stromerzeugungseinheit ($G_i$) und/oder für die diesem zweiten Steuerautomaten ($A_i$) zugeordnete Stromspeichereinheit ($Bat_i$) berechnet (E7) wird, gemäß

$$U_{ref(i)} = U_{offset(i)} - K_{UQ(i)} \cdot Q_{mes(i)}$$

wobei $K_{UQ(i)}$ ein vorgeschriebener Koeffizient ungleich Null ist,

wobei das Rechnerprogramm von dem ersten zentralen Steuerautomaten (100) und dem zweiten Steuer-

automaten ($A_i$) ausgeführt wird.

## Claims

1. A device for controlling a plant (C), wherein the plant comprises at least one electricity generation unit ($G_i$) and/or at least one electricity storage unit ($Bat_i$), and at least one common connection terminal (10), which is connected to the electricity generation unit ($G_i$) and/or to the electricity storage unit ($Bat_i$) and which is intended to be connected to at least one line ($D_1$, $D_2$, $D_N$) of an electricity consumption and/or production microgrid (MR),

   the control device comprising at least one first central automatic controller (100) as well as at least one second automatic controller ($A_i$) for each electricity generation unit ($G_i$) and/or electricity storage unit ($Bat_i$), the second automatic controller ($A_i$) being connected to the first central automatic controller (100), the first central automatic controller (100) being configured to compute and transmit to the second automatic controller ($A_i$) at least one offset voltage $U_{offset(i)}$ of each electricity generation unit ($G_i$) and/or of each electricity storage unit ($Bat_i$), so that the voltage of the common connection terminal (10) is set to a voltage reference $U_{centraleRef}$, **characterized in that** the first central automatic controller (100) comprises
   a second member (2) for measuring or determining a voltage $U_{Rmes}$ of the common connection terminal (10),
   a third computing member (3) for computing the voltage reference $U_{centraleRef}$ of the common connection terminal (10) according to a first prescribed function f,
   each second automatic controller ($A_i$) comprises a fourth member ($4_i$) for measuring or determining a first individual reactive power $Q_{mes(i)}$ supplied or absorbed by the electricity generation unit ($G_i$) associated with this second automatic controller ($A_i$) and/or the electricity storage unit ($Bat_i$) associated with this second automatic controller ($A_i$) to the connection terminal (10),
   the first central automatic controller (100) comprises a first voltage corrector (5), having a second prescribed transfer function corr,
   the first automatic controller (100) being configured to compute

   $$U_{offset} = corr(U_{centraleRef} - U_{Rmes})$$

   where $U_{offset}$ is a first central offset voltage, computed by applying the second prescribed transfer function corr of the first corrector to the difference $U_{centraleRef} - U_{Rmes}$, the first automatic controller (100) is configured to compute the second offset voltage $U_{offset(i)}$ according to a third prescribed function ($g_i$) from the first central offset voltage $U_{offset}$ and to transmit the second offset voltage $U_{offset(i)}$ to the second automatic controller ($A_i$) for the electricity generation unit ($G_i$) associated with this second automatic controller ($A_i$) and/or for the electricity storage unit ($Bat_i$) associated with this second automatic controller ($A_i$),
   the second automatic controller ($A_i$) is configured to compute at least a local setpoint voltage $U_{ref(i)}$ for the electricity generation unit ($G_i$) associated with this second automatic controller ($A_i$) and/or for the electricity storage unit ($Bat_i$) associated with this second automatic controller ($A_i$), according to

   $$U_{ref(i)} = U_{offset(i)} - K_{UQ(i)} \cdot Q_{mes(i)}$$

   where $K_{UQ(i)}$ is a prescribed, non-zero coefficient,
   the first automatic controller (100) further comprises at least a fifth receiving member (5) to receive:

   - first voltage remote measurement values ($U_{sources-décentralisées-k}$) respectively of decentralized electricity production sources ($S_k$, $S_{k+1}$) of the electricity consumption and/or production microgrid (MR), remote by at least a non-zero distance ($N_{11}$, $N_{12}$) from one another and from the common connection terminal (10) of the plant (C),
   - second voltage remote measurement values ($U_{postes-consommateurs-l}$) respectively of decentralized electricity consumer stations ($PC_l$, $PC_{l+1}$, $PC_{l+2}$) of the line ($D_1$, $D_2$,.., $D_N$) of the electricity consumption and/or production microgrid (MR), remote by at least a non-zero distance ($N_{13}$, $N_{14}$, $N_{15}$) from one another and from the common connection terminal (10) of the plant (C ),

   the first prescribed function f comprises:

   - computing a voltage maximum ($U_{Rmax}$) of the voltage $U_{Rmes}$ of the common connection terminal (10) of the plant (C) and of the first voltage remote measurement values ($U_{sources-décentralisées-k}$) respectively of the decentralized electricity production sources ($S_k$, $S_{k+1}$) of the electricity consumption and/or production microgrid (MR),

- computing a voltage minimum ($U_{Rmin}$) of the voltage $U_{Rmes}$ of the common connection terminal (10) of the plant (C) and of the second voltage remote measurement values ($U_{postes-consommateurs-l}$) respectively of the decentralized electricity consumer stations ($PC_l$, $PC_{l+1}$, $PC_{l+2}$) of the electricity consumption and/or production microgrid (MR),

- taking into account the half-sum of the voltage maximum ($U_{Rmax}$) and of the voltage minimum ($U_{Rmin}$) for the computation of the voltage reference $U_{centraleRef}$.

2. The device as claimed in claim 1, **characterized in that** the third computing member (3) comprises a second corrector (REG) of proportional-integral-derivative type supplying the voltage reference $U_{centraleRef}$ from the difference between on the one hand a prescribed nominal voltage ($U_N$) of the microgrid and on the other hand the half-sum of the voltage maximum ($U_{Rmax}$) and of the voltage minimum ($U_{Rmin}$).

3. The device as claimed in any one of the preceding claims, **characterized in that** the first central automatic controller (100) comprises another member (4) for measuring or determining a first total reactive power $Q_{mes}$ leaving the plant (C), supplied or absorbed by the electricity generation unit ($G_i$) and/or the electricity storage unit ($Bat_i$),

the first automatic controller (100) comprises:

a sixth member (6) for computing reactive power setpoints ($Q_{source-décentralisée-k}$, $Q_{source-décentralisée-k+1}$) of the respective decentralized electricity production sources ($S_k$, $S_{k+1}$) of the electricity consumption and/or production microgrid (MR), remote by at least a non-zero distance ($N_{11}$, $N_{12}$) from the common connection terminal (10), which are proportions ($r_k$, $r_{k+1}$) at least of the first total reactive power $Q_{mes}$ leaving the plant (C), supplied or absorbed by the electricity generation unit ($G_i$) and/or the electricity storage unit ($Bat_i$).

4. The device as claimed in claim 3, **characterized in that** the first automatic controller (100) further comprises at least a seventh receiving member (7) to receive:

- third respective reactive power remote measurement values ($Q_{mes-source-décentralisée-k}$, $Q_{mes-source-décentralisée-k+1}$) of the respective decentralized electricity production sources ($S_k$, $S_{k+1}$) of the electricity consumption and/or production microgrid (MR),

the sixth computing member (6) being configured to compute a second total reactive power ($Q_{microréseau}$) equal to the sum (SPR) of the first total reactive power $Q_{mes}$ leaving the plant (C), supplied or absorbed by the electricity generation unit ($G_i$) and/or the electricity storage unit ($Bat_i$) and of the third reactive power remote measurement values ($Q_{mes-source-décentralisée-k}$, $Q_{mes-source-décentralisée-k+1}$) of the respective decentralized electricity production sources ($S_k$, $S_{k+1}$) of the electricity consumption and/or production microgrid (MR) and to compute the reactive power setpoints ($Q_{source-décentralisée-k}$, $Q_{source-décentralisée-k+1}$) of the respective decentralized electricity production sources ($S_k$, $S_{k+1}$) of the electricity consumption and/or production microgrid (MR) as being proportions ($r_k$, $r_{k+1}$) of said sum ($Q_{microréseau}$, SPR).

5. The device as claimed in claim 3 or 4, **characterized in that** said proportions ($r_k$, $r_{k+1}$) in the reactive power setpoints ($Q_{source-décentralisée-k}$, $Q_{source-décentralisée-k+1}$) of the respective decentralized electricity production sources ($S_k$, $S_{k+1}$) of the electricity consumption and/or production microgrid (MR) correspond to respective ratios of a prescribed reactive power capacity ($CPRS_k$, $CPRS_{k+1}$) of the respective decentralized electricity production sources ($S_k$, $S_{k+1}$) of the electricity consumption and/or production microgrid (MR), divided by a sum (SCPRS) of the prescribed reactive power capacities ($CPRS_k$, $CPRS_{k+1}$) of the respective electricity production sources ($S_k$, $S_{k+1}$) of the line ($D_1$, $D_2$,.., $D_N$) of the electricity consumption and/or production microgrid (MR) and of the respective prescribed reactive power capacities ($CPRS_i$) of the electricity generation unit ($G_i$) and/or of the electricity storage unit ($Bat_i$).

6. The device as claimed in any one of the preceding claims, **characterized in that** the third prescribed function ($g_i$) comprises the division of the first central offset voltage $U_{offset}$ by a prescribed nominal voltage ($U_{iN}$) of the electricity generation unit ($G_i$) and/or of the electricity storage unit ($Bat_i$).

7. The device as claimed in any one of claims 3 to 5, **characterized in that** the first central automatic controller (100) comprises, as other member (4), another member (4) for determining the first total reactive power $Q_{mes}$ leaving the plant (C), supplied or absorbed by the electricity generation unit ($G_i$) and/or the electricity storage unit ($Bat_i$) by

summing the first individual reactive powers $Q_{mes(i)}$.

8. The device as claimed in any one of claims 3 to 5, **characterized in that** the first central automatic controller (100) comprises, as other member (4), another member (4) for measuring the first total reactive power $Q_{mes}$ leaving the plant (C), supplied or absorbed by the electricity generation unit ($G_i$) and/or the electricity storage unit ($Bat_i$) on the common connection terminal (10).

9. A method for controlling a plant (C), wherein the plant comprises at least one electricity generation unit ($G_i$) and/or at least one electricity storage unit ($Bat_i$), and at least one common connection terminal (10), which is connected to the electricity generation unit ($G_i$) and/or to the electricity storage unit ($Bat_i$) and which is intended to be connected to at least one line ($D_1$, $D_2$, $D_N$) of an electricity consumption and/or production microgrid (MR),

a method in which a central automatic controller (100) for controlling the electricity generation unit ($G_i$) and/or of the electricity storage unit ($Bat_i$) computes (E5) and transmits at least one offset voltage $U_{offset(i)}$ of each electricity generation unit ($G_i$) and/or of each electricity storage unit ($Bat_i$) to at least a second automatic controller ($A_i$) for controlling each electricity generation unit ($G_i$) and/or electricity storage unit ($Bat_i$), so that the voltage of the common connection terminal (10) is set to a voltage reference $U_{centraleRef}$,
**characterized by**
receiving by a fifth receiving member (5):

- first voltage remote measurement values ($U_{sources-décentralisées-k}$) respectively of decentralized electricity production sources ($S_k$, $S_{k+1}$) of the electricity consumption and/or production microgrid (MR), remote by at least a non-zero distance ($N_{11}$, $N_{12}$) from one another and from the common connection terminal (10) of the plant (C),
- second voltage remote measurement values ($U_{postes-consommateurs-l}$) respectively of decentralized electricity consumer stations ($PC_l$, $PC_{l+1}$, $PC_{l+2}$) of the line ($D_1$, $D_2$,.., $D_N$) of the electricity consumption and/or production microgrid (MR), remote by at least a non-zero distance ($N_{13}$, $N_{14}$, $N_{15}$) from one another and from the common connection terminal (10) of the plant (C ),

measuring (E2) by a second measuring member (2) of the first central automatic controller (100) a voltage $U_{Rmes}$ of the common connection terminal (10),
computing (E3) by a third computing member (3) of the first central automatic controller (100) a voltage reference $U_{centraleRef}$ of the common connection terminal (10) according to a first prescribed function f,
the first prescribed function f comprises:

- computing a voltage maximum ($U_{Rmax}$) of the voltage $U_{Rmes}$ of the common connection terminal (10) of the plant (C) and of the first voltage remote measurement values ($U_{sources-décentralisées-k}$) respectively of the decentralized electricity production sources ($S_k$, $S_{k+1}$) of the electricity consumption and/or production microgrid (MR),
- computing a voltage minimum ($U_{Rmin}$) of the voltage $U_{Rmes}$ of the common connection terminal (10) of the plant (C) and of the second voltage remote measurement values ($U_{postes-consommateurs-l}$) respectively of the decentralized electricity consumer stations ($PC_l$, $PC_{l+1}$, $PC_{l+2}$) of the electricity consumption and/or production microgrid (MR),
- taking into account the half-sum of the voltage maximum ($U_{Rmax}$) and of the voltage minimum ($U_{Rmin}$) for the computation of the voltage reference $U_{centraleRef}$,

measuring or determining (E4) by a fourth measuring or determining member ($4_i$) of the second automatic controller ($A_i$) a first individual reactive power $Q_{mes(i)}$ supplied or absorbed by the electricity generation unit ($G_i$) associated with this second automatic controller ($A_i$) and/or by the electricity storage unit ($Bat_i$) associated with this second automatic controller ($A_i$) to the connection terminal (10),
the first central automatic controller (100) having a first voltage corrector (5), having a second prescribed transfer function corr,
computing (E5) by the first central automatic controller (100)

$$U_{offset} = corr(U_{centraleRef} - U_{Rmes})$$

where $U_{offset}$ is a first central offset voltage, computed by applying the second prescribed transfer function corr of the first corrector to the difference $U_{centraleRef} - U_{Rmes}$,

computing (E6) by the first automatic controller (100) the second offset voltage $U_{offset(i)}$ from the first central offset voltage $U_{offset}$ according to a third prescribed function ($g_i$) and transmitting by the first automatic controller (100) the second offset voltage $U_{offset(i)}$ to the second automatic controller ($A_i$) for the electricity generation unit ($G_i$) associated with this second automatic controller ($A_i$) and/or for the electricity storage unit ($Bat_i$) associated with this second automatic controller ($A_i$),

computing (E7) by the second automatic controller ($A_i$) at least a local setpoint voltage $U_{ref(i)}$ for the electricity generation unit ($G_i$) associated with this second automatic controller ($A_i$) and/or for the electricity storage unit ($Bat_i$) associated with this second automatic controller ($A_i$), according to

$$U_{ref(i)} = U_{offset(i)} - K_{UQ(i)}.Q_{mes(i)}$$

where $K_{UQ(i)}$ is a prescribed, non-zero coefficient.

10. A computer program comprising code instructions for implementing a method for controlling a plant (C), wherein the plant comprises at least one electricity generation unit ($G_i$) and/or at least one electricity storage unit ($Bat_i$), and at least one common connection terminal (10), which is connected to the electricity generation unit ($G_i$) and/or to the electricity storage unit ($Bat_i$) and which is intended to be connected to at least one line ($D_1, D_2, D_N$) of an electricity consumption and/or production microgrid (MR),

a method in which a central automatic controller (100) for controlling the electricity generation unit ($G_i$) and/or of the electricity storage unit ($Bat_i$) computes (E5) and transmits at least one offset voltage $U_{offset(i)}$ of each electricity generation unit ($G_i$) and/or of each electricity storage unit ($Bat_i$) to at least a second automatic controller ($A_i$) for controlling each electricity generation unit ($G_i$) and/or electricity storage unit ($Bat_i$), so that the voltage of the common connection terminal (10) is set to a voltage reference $U_{centraleRef}$,

**characterized by**

receiving by a fifth receiving member (5):

- first voltage remote measurement values ($U_{sources-décentralisées-k}$) respectively of decentralized electricity production sources ($S_k, S_{k+1}$) of the electricity consumption and/or production microgrid (MR), remote by at least a non-zero distance ($N_{11}, N_{12}$) from one another and from the common connection terminal (10) of the plant (C),
- second voltage remote measurement values ($U_{postes-consommateurs-l}$) respectively of decentralized electricity consumer stations ($PC_l, PC_{l+1}, PC_{l+2}$) of the line ($D_1, D_2,.., D_N$) of the electricity consumption and/or production microgrid (MR), remote by at least a non-zero distance ($N_{13}, N_{14}, N_{15}$) from one another and from the common connection terminal (10) of the plant (C ),

measuring (E2) by a second measuring member (2) of the first central automatic controller (100) a voltage $U_{Rmes}$ of the common connection terminal (10),

computing (E3) by a third computing member (3) of the first central automatic controller (100) a voltage reference $U_{centraleRef}$ of the common connection terminal (10) according to a first prescribed function f,

the first prescribed function f comprises:

- computing a voltage maximum ($U_{Rmax}$) of the voltage $U_{Rmes}$ of the common connection terminal (10) of the plant (C) and of the first voltage remote measurement values ($U_{sources-décentralisées-k}$) respectively of the decentralized electricity production sources ($S_k, S_{k+1}$) of the electricity consumption and/or production microgrid (MR),
- computing a voltage minimum ($U_{Rmin}$) of the voltage $U_{Rmes}$ of the common connection terminal (10) of the plant (C) and of the second voltage remote measurement values ($U_{postes-consommateurs-l}$) respectively of the decentralized electricity consumer stations ($PC_l, PC_{l+1}, PC_{l+2}$) of the electricity consumption and/or production microgrid (MR),
- taking into account the half-sum of the voltage maximum ($U_{Rmax}$) and of the voltage minimum ($U_{Rmin}$) for the computation of the voltage reference $U_{centraleRef}$,

measuring or determining (E4) by a fourth measuring or determining member ($4_i$) of the second automatic controller ($A_i$) a first individual reactive power $Q_{mes(i)}$ supplied or absorbed by the electricity generation unit ($G_i$) associated with this second automatic controller ($A_i$) and/or by the electricity storage unit ($Bat_i$) associated with this second automatic controller ($A_i$) to the connection terminal (10),

the first central automatic controller (100) having a first voltage corrector (5), having a second prescribed transfer function corr,
computing (E5) by the first central automatic controller (100)

$$U_{offset} = corr(U_{centraleRef} - U_{Rmes})$$

where $U_{offset}$ is a first central offset voltage, computed by applying the second prescribed transfer function corr of the first corrector to the difference $U_{centraleRef} - U_{Rmes}$,

computing (E6) by the first automatic controller (100) the second offset voltage $U_{offset(i)}$ from the first central offset voltage $U_{offset}$ according to a third prescribed function ($g_i$) and transmitting by the first automatic controller (100) the second offset voltage $U_{offset(i)}$ to the second automatic controller ($A_i$) for the electricity generation unit ($G_i$) associated with this second automatic controller ($A_i$) and/or for the electricity storage unit ($Bat_i$) associated with this second automatic controller ($A_i$),

computing (E7) by the second automatic controller ($A_i$) at least a local setpoint voltage $U_{ref(i)}$ for the electricity generation unit ($G_i$) associated with this second automatic controller ($A_i$) and/or for the electricity storage unit ($Bat_i$) associated with this second automatic controller ($A_i$), according to

$$U_{ref(i)} = U_{offset(i)} - K_{UQ(i)} \cdot Q_{mes(i)}$$

where $K_{UQ(i)}$ is a prescribed, non-zero coefficient,
the computer program being executed by the first central automatic controller (100) and by the second automatic controller ($A_i$).

**FIG. 1**

**FIG. 2**

## FIG. 3

## FIG. 4

## FIG. 5

**FIG. 6**

**FIG. 7**

# FIG. 8

# FIG. 9

# FIG. 10

## FIG. 11

## FIG. 12

FG. 13

EP 4 322 362 B1

## FIG. 14

**FG. 15**

100

3,f

EP 4 322 362 B1

**FIG. 16**

100

$Q_{microréseau}$

SPR

SADD3

ADD3

$EMULT5_k$ / $EPBF4_k$

$MULT5_k$ — $CPRS_k, CPRS_i, SCPRS$ / $SMULTS_k$

$r_k$

$EPBF4_k$ / $b_k$

$FPB4_k$

Filtre passe - bas

$SPB4_k$ / $Q_{source-décentralisée-k}$

$A_k$

$EMULT5_{k+1}$ / $EPBF4_{k+1}$

$MULT5_{k+1}$ — $CPRS_{k+1}, CPRS_i, SCPRS$ / $SMULTS_{k+1}$

$r_{k+1}$

$EPBF4_{k+1}$ / $b_{k+1}$

$FPB4_{k+1}$

Filtre passe - bas

$SPB4_{k+1}$ / $Q_{source-décentralisée-k+1}$

$A_{k+1}$

6

## FIG. 17

## FIG. 18

## FIG. 19

Puissance active

## FIG. 20

Tension aux différents noeuds

# FIG. 21

Tension aux différents noeuds

## FIG. 22

FIG. 23

## FIG. 24

## RÉFÉRENCES CITÉES DANS LA DESCRIPTION

**Documents brevets cités dans la description**

- CN 109038644 A